# EUROPEAN PATENT SPECIFICATION

(11) **EP 4 077 930 B1**
(45) Date of publication and mention of the grant of the patent: **11.11.2026**
(21) Application number: 20835678.2
(22) Date of filing: 21.12.2020
(51) Int. Cl.: F03D 17/00

(54) **DEVICE FOR DETERMINING THE DISTANCE BETWEEN A WIND TURBINE BLADE AND ITS WIND TURBINE TOWER AT PASSING**
VORRICHTUNG ZUR BESTIMMUNG DES ABSTANDES ZWISCHEN EINEM ROTORBLATT UND EINEM TURM EINER WINDTURBINE BEIM DURCHGANG
DISPOSITIF DE DÉTERMINATION DE LA DISTANCE ENTRE UNE PALE D'ÉOLIENNE ET SA TOUR D'ÉOLIENNE LORS DU PASSAGE

(30) Priority: 20.12.2019 DK PA201970809
(43) Date of publication of application: 26.10.2022
(73) Proprietor: KK Wind Solutions A/S, 7430 Ikast (DK)
(72) Inventor: CHRISTENSEN, Axel Juhl, 6100 Haderslev (DK); GRAM-HANSEN, Klaus, 6100 Haderslev (DK); THOMSEN, Lars, 5500 Middelfart (DK); THØGERSEN, Rasmus, 6400 Sønderborg (DK)
(74) Representative: Patentgruppen A/S
(86) International application number: PCT/DK2020/050400
(87) International publication number: WO 2021/121527

(56) References cited:
- EP-A1- 3 232 051
- DE-A1- 102013 009 878

## Description

### Field of the Invention

The present invention relates to a method for determining a tip-to-tower clearance of an upwind wind turbine, where the wind turbine comprises a wind turbine tower, a nacelle arranged on top of the wind turbine tower, and rotatable rotor with at least one wind turbine blade arranged relative to the nacelle, where the method comprises the steps of measuring a distance between the wind turbine tower and a part of the wind turbine blade using a non-contact measuring technique.

The present invention also relates to a wind turbine comprising a wind turbine tower, a nacelle arranged on top of the wind turbine tower, a rotatable rotor with at least one wind turbine blade arranged relative to the nacelle, wherein a sensor unit is configured to measure a distance between the wind turbine tower and a part of the wind turbine blade using a non-contact measuring technique.

### Background of the Invention

Today wind turbines form an established part of the general energy infrastructure and have been utilised for many years to harvest the wind's energy and to convert it into electrical energy. There has been an increased focus over the recent years on utilising renewable energy sources and increasing the clean energy production due to climate and environmental changes.

The wind turbine comprises a wind turbine tower, a nacelle connected to the wind turbine tower via a yaw system, and a rotor with a number of wind turbine blades coupled to a drive train inside the nacelle via a rotor shaft. Full span blades are at the blade root connected to a rotor hub via a pitch system. Partial pitch blades have an inner blade section fixedly mounted to the rotor hub and an outer blade section connected to the inner blade section via a pitch system. A local wind turbine controller connected to a number of various sensors in the wind turbine is used to control the operation of the wind turbine. Optionally, the local wind turbine controllers are in further communication with a remote wind farm controller, wherein the remote controller sends control signals to the individual wind turbine controllers and receive various operating signals from the local wind turbines.

In an effort to make the wind turbines more cost effective, the size and thus the rated power output is increased. However, scaling up of the wind turbine in size presents some design and engineering challenges to the foundation, the wind turbine tower, the drive train and especially the wind turbine blades. Increasing the size and length of the wind turbine blades requires an optimized design for reducing the total weight, the material consumption and the fatigue and maximum loads. It also requires improved control strategies for controlling the aerodynamic lift and thereby rotor torque and rotational speed of the wind turbine blade.

It is known that the wind turbine blades are flexible in their structure and will bend out of the rotor plane, where amount of deflection depend on the actual wind force, the rotational speed and the actual pitch angle. This could potentially lead to the wind turbine blades hitting the wind turbine tower, which would be extremely critical for the integrity of the structure and represent an unacceptable safety risk. If placed on a floating foundation, additional deflection is introduced into the wind turbine blades due to current and wave loads acting on the floating foundation.

One way to solve this problem is to tilt the drive train and thus the rotor relative to the horizontal axis, thereby moving the wind turbine blade further away from the wind turbine tower. Another way of solving this problem is to increase the structural strength in the wind turbine blades and/or introduce a pre-bend section into the wind turbine blades. A further way of solving this problem is to use a distance sensor to measure the distance between the blade tip and the wind turbine, wherein the local wind turbine controller generates an event signal if the measured tip-to-tower distance drops below a safety threshold. However, due to uncertainty in the actual deflection and thereby the actual distance between blade and tower, a safety design margin is estimated for a worst-case scenario and used in design of e.g. wind turbine blades.

US 2015/0159632 A1 discloses a tower clearance measuring system comprising a single radar unit or an array of radar units mounted on the wind turbine tower, wherein each radar unit uses the Doppler shift to measure the distance. A transmitter continuously transmits a frequency modulated wave signal and a receiver receives the reflected signal of the wind turbine blade each time it passes through the field of the radar. A processor then uses the reflected signal and the transmitted signal to determine a plurality of a range signals representative of the measured distance. The range signals are further to determine the velocity of the blade tip towards or away from the wind turbine tower. The processor generates a shutdown control signal for stopping the operation of the wind turbine, if the velocity exceeds a threshold value. It is not disclosed how this sensor unit is powered or that the control signal can be generated solely on the range signals.

WO 02/02936 A1 discloses a laser sensor unit configured to be mounted on the wind turbine tower, wherein the distance to the wind turbine blade is determined by a computer. The computer further calculates the pitch angle of the wind turbine blade based on the stored distance. However, this solution is only used to verify/calibrate the pitch angles of the wind turbine blades after installation of the wind turbine. There are no pointers in WO 02/02936 A1 that the laser sensor unit can be used for tip-to-tower clearance measurements.

US 2008/0101930 A1 discloses a tip-to-tower clearance system comprising a radar sensor mounted on the wind turbine tower, where the radar transmits a radar beam and measured the reflected beam signal. A processor uses the Doppler shift between the transmitted beam signal and the reflected beam signal to generate a resulting signal indicative of the wind turbine blade passing by the radar sensor. The slope of this resulting signal indicates the distance between the wind turbine tower and the wind turbine blade. An azimuth sensor on the hub is used to activate the radar sensor when the wind turbine blade is approaching the wind turbine tower. The slope and shape of the resulting signal must be determined empirically for each wind turbine design.

Prior art document EP3232051 discloses a load measuring system where accelerometers are arranged on a wind turbine blade and a distance sensor is located on the tower, where the acceleration signals and the distance signal are transmitted to a controller which determine the deflection data of the wind turbine blade. The controller further receives operating conditions of the wind turbine blade, such as the pitch angle and the rotational angle, from a pitch controller. These operating conditions are then used by the controller to correct the deflection data.

Other solutions have been proposed, but common for these solutions and the above solutions are that they have not been implemented on a large scale mainly to implementation difficulties, practical usability, complexity and costs.

### Object of the Invention

An object of this invention is to provide a system and a method that solves the abovementioned problems of the prior art.

An object of this invention is to provide a system and a method that can be implemented on a large scale.

An object of this invention is to provide a system and a method which may allow a greater power production while decreasing levelized cost of energy and increase safety by avoiding tower strikes and fatigue exhaustion. An object of the invention is furthermore to increase safety related to wind turbines.

### Description of the Invention

An object of the invention is achieved by a method of determining an actual pitch angle of a wind turbine blade of a wind turbine and a tip-to-tower distance of a wind turbine, as defined in claim 1, the wind turbine comprising a wind turbine tower, a nacelle arranged on top of the wind turbine tower, a rotatable rotor with at least one wind turbine blade arranged relative to the nacelle, where a distance sensor unit is arranged on the at least one wind turbine blade and comprises at least a transmitter and a receiver, wherein the method comprises the steps of:
- transmitting a signal from the distance sensor unit toward the wind turbine tower,
- measuring a signal reflected from the wind turbine tower,
- determining the distance between the wind turbine tower and the at least one wind turbine blade based on the transmitted signal and the reflected signal, wherein the method further comprises the steps of
- determining the actual pitch angle at the sensor unit location, based on establishing at least one distance profile indicative of at least one pitch angle of the at least one wind turbine blade, wherein the actual pitch angle is determined based on the at least one distance profile,
- correcting the measured distance based on at least one of the actual pitch angle and a deflection angle of the at least one wind turbine blade at the location of the distance sensor unit.
wherein the actual pitch angle is different from a measured pitch angle, wherein the measured pitch angle is measured at a pitch bearing system of the wind turbine.

This is advantageous in that it provides a fast and simple method of determining the actual tip-to-tower clearance of an onshore as well as an offshore wind turbine, where the distance between the sensor unit and the wind turbine tower is measured using a non-contact technique. Thereby, allowing the present distance sensor to be manufactured as a small, compact unit which can be provided with its own power source, thus allowing for a simple and fast installation and with no prohibitive costs to ensure large scale deployment. The present distance sensor unit may thus be installed on new wind turbines either at the factory or onsite, or retrofitted onto existing wind turbines.

The present distance sensor has an increased functionality compared with conventional distance sensor units as it is able to determine the actual distance between the wind turbine blade and the wind turbine tower, for example based on the actual pitch angle at the sensor location and/or the deflection angle. The present distance sensor may also determine the actual rotational speed at the sensor location. The distance measurement is influenced by the deflection of the wind turbine blade as well as the pitch angle of the wind turbine, where the present method is able to compensate for the actual pitch angle and/or the deflection angle. Thereby providing a more accurate distance measurement and reducing the uncertainties about the actual deflection. This in turn allows for the use of a smaller safety margin (also sometimes referred to as safety design margin) and increased power production. Thus, the wind turbine blades and/or the control strategy do not have to be designed based on a worst-case scenario.

Conventional distance sensor unit are only able to determine an averaged distance between the wind turbine blade and the wind turbine tower, however the tip-to-tower clearance may actually be less than the measured distance. This presents an increased risk of the wind turbine blade hitting the wind turbine tower at low distances. Therefore, the worst-case scenario is used as safety margin when designing the wind turbine blade and selecting the control strategy.

In conventional methods, the pitch angle is measured at the pitch bearing system using an encoder. This measured pitch angle is then used in the wind turbine controller to control the operation of the wind turbine. However, the pitch bearing system is typically placed at the blade root or a distance from the blade tip, whereas the distance measurement is performed at or near the blade tip as the deflection is greatest in this blade tip section. Therefore, the actual pitch angle at the location of the distance measurement often differs from the measured pitch angle due to the twisting and flexing of the wind turbine blade. This in turn leads to uncertainties about the actual pitch angle at the sensor location.

Various embodiments of the invention may for example employ an actual pitch angle determined solely by the distance sensor unit or, optionally determined additionally by a wind turbine controller, e.g. a pitch angle currently selected by the wind turbine controller, optionally corrected based on current wind speeds or various measurements. In some embodiments, the actual pitch angle is determined based on both measurements from the distance sensor unit and input from the wind turbine controller.

An advantage of locating the distance sensor unit on the blade is that it is able to transmit and measure a signal reflected on the wind turbine tower independent of the yaw of the wind turbine tower. If, hypothetically, the distance sensor unit was installed on the wind turbine tower and measured the tip-to-tower clearance by reflecting a signal on the wind turbine blade, then the distance sensor unit would only be able to measure a distance for a very limited range of orientations of the rotor. Or alternatively, a large number of distance sensor units would have to be installed on the tower such that all orientations would be covered. Or alternatively, the distance sensor unit would have to be rotated around the wind turbine tower to follow the orientation of the rotor. In comparison, arranging the distance sensor unit on a wind turbine blade provides a simpler solution, which is advantageous.

A further advantage of the invention is measuring the actual pitch angle in itself. Th actual pitch angle may be indicative of an error or an incorrect calibration of the pitch angle of the pitch bearing system of the wind turbine. Further, the actual pitch angle may be indicative of the mechanical state of the blade, whether it is worn and may require replacement.

The tip-to-tower clearance may be understood as a minimum distance between the wind turbine tower and a wind turbine blade or its tip during the rotation of the rotor. In case of deflection of a wind turbine blade, tilting of the rotor/nacelle, and/or pitching of the wind turbine blade, this minimum distance may be affected. The tip-to-tower clearance may also be referred to as an actual distance. A distance sensor unit may not necessarily be located at the position of the blade which has the minimal distance to the tower, e.g. the tip of the blade. In some embodiments, a distance sensor unit provides the distance at its location. In some embodiments, a distance sensor unit provides the minimal distance by performing a estimate based on the distance at the location of the sensor. Such an estimate may for example be based on the deflection angle of the blade, which can be used to extrapolate the extend of the blade from the position and distance and distance sensor unit.

As exemplified in this disclosure, measuring the tip-to-tower clearance is prone to various errors. Even though various embodiments of the invention may have a relatively small error of the determined tip-to-tower clearance, it is impossible to fully eliminate such errors. Embodiments of the invention are thus not restricted to a particular magnitude of error. The determined tip-to-tower clearance may also be understood as a representation of the tip-to-tower clearance.

In some embodiments of the invention, the distance between the blade and the tower is primarily measured by other means, e.g. by an accelerometer which is able to estimate the deflection of the blade. In such embodiments, the transmission and reflection of a signal to measure a distance and the correction of this distance based on the actual pitch angle may then be used occasionally to validate or correct the distance between the blade and the tower which was measured by other means.

The rotatable rotor may rotate around a rotation axis of the wind turbine.

A distance sensor unit may also be understood as a pitch sensor unit, an eigenfrequency sensor unit, or a deflection sensor unit.

The present method may scan the angular field covered by the transmitter and/or receiver to perform multiple distance measurements as the wind turbine blade passes by the wind turbine tower. These distance measurements are descriptive of a distance profile of the wind turbine blade or wind turbine tower at a certain pitch angle. Other measurement techniques may be used to determine the distance profile.

In some embodiments of the invention, a single distance sensor unit is installed on a single wind turbine blade. The tip-to-tower clearance of a single blade may typically be indicative of the tip-to-tower clearance of other blades. However, in some embodiments of the invention, one or more distance sensor units are installed on several wind turbine blades of a single wind turbine.

A distance profile is typically measured during a single passage of the wind turbine blade relative to the wind turbine tower. A distance profile measured by a single distance sensor unit installed on a wind turbine blade may thus be performed once every rotation i.e. each time the wind turbine blade comprising the distance sensor unit passes the tower.

A distance profile may typically depend on both the distance between the wind turbine tower and the wind turbine blade, the cross-sectional shape of the wind turbine tower, and the pitch angle. The cross-sectional shape of a wind turbine tower may typically be circular.

If the pitch angle is zero, the distance profile may typically approximately reproduce at least a part of the cross-sectional shape of the wind turbine tower, e.g. approximately an arc of a circle. For example, the first and last measurements associated with the distance profile correspond to a larger distance than measurements performed between the first and last measurements, due to the shape of the wind turbine tower.

If, however, the pitch angle is non-zero, the distance profile may become skewed and/or broader, and may no longer correspond, for example, to a shape of an arc of a circle. This skewness can then be used to derive an actual pitch angle.

The distance sensor may be used to determine a set of distance profiles each measured at different pitch angles. The set of distance profiles may comprise at least two distance profiles, preferably a plurality of distance profile descriptive of the entire pitch angle range, or a sub-range thereof. The individual distance profiles and the corresponding pitch angles may be stored in a look-up table in a memory unit of the distance sensor unit. The present method may use interpolation together with the lookup table to estimate the actual pitch angle as function of a certain distance profile, or vice versa. The actual pitch angle may be indicative of a difference between the measured distance and the actual distance of the wind turbine blade in a horizontal plane relative to the wind turbine tower. If the actual pitch angle is zero, i.e. parallel with the rotor plane, then the measured distance may be equal to the actual distance. If the actual pitch angle differs from zero, i.e. placed in an oblique angle relative to the rotor plane, then the measured distance differs from the actual distance. The present invention is advantageous in that it calculates this actual distance and thereby eliminating the error causing this difference in the distance calculated by prior art systems.

The stored distance profiles may be updated each time the wind turbine blade passes the wind turbine blade. This allows the distance profiles to be adapted to the actual conditions of the wind turbine blade over the lifetime. A wind turbine blade may for example become more flexible towards its end of lifetime, which may result in a larger deflection and a larger difference between the measured pitch angle (at the bearings) and the actual pitch angle.

Similarly, the deflection angle may also be indicative of the difference between the measured distance and the actual distance of the wind turbine blade in a horizontal plane relative to the wind turbine tower. The distance profiles may, optionally, be based on the deflection angle.

According to one embodiment, the method further comprises the step of measuring a rotational speed of the at least one wind turbine blade, wherein the actual pitch angle is estimated using a predetermined correlation between the actual pitch angle and at least the rotational speed.

The actual pitch angle may alternatively be determined using at least the rotational speed of the wind turbine blade. The rotational speed may be measured by the distance sensor unit using a gyroscope integrated in the distance sensor unit. The measured rotational speed may be stored in the memory unit in the distance sensor unit. The rotational speed may also be measured via measurements performed in the nacelle or the hub of the wind turbine.

The actual pitch angle may be estimated as function of the above measured rotational speed, or the rotational speed received from the wind turbine controller, using a known correlation between at least the rotational speed and the pitch angle. This correlation may be determined using simulations, tests or previously field measurements. The correlation may be known to a skilled person and may further be determined based on the wind speed and the power output. The estimated pitch angle may also be stored in the distance sensor unit.

The predetermined correlation between the actual pitch angle and the rotational speed may for example be based on a lookup table or a mathematical function which approximates the correlation.

According to one embodiment, the actual pitch angle of the at least one wind turbine blade is used to correct the measured distance between the wind turbine tower and the one wind turbine blade.

Once the actual pitch angle has been determined or estimated, a processor in the distance sensor unit may use this pitch angle to calculate the actual distance between the wind turbine tower and the wind turbine blade based on the measured distance using trigonometry. The measured distance and/or the actual distance may be stored in the memory unit in the distance sensor unit. This allows the distance sensor unit to compensate for the influence of the pitch angle and thus provide a more accurate distance measurement.

According to one embodiment, the step of correcting the measured distance is based on the actual pitch angle and the deflection angle.

The present method may be based on correcting the measured distance based on either the actual pitch angle, the deflection angle, or both. The deflection angle of the wind turbine blade is indicative of a difference between the measured distance and the actual distance of the wind turbine blade in a vertical plane relative to the wind turbine tower. As the wind turbine blade bends due to gravity and the incoming wind speed, the tip end will tend to move away of the rotor plane relative to the blade root and towards the wind turbine tower, thereby causing the distance sensor unit to enter an oblique angle relative to the horizontal plane. The present method may thus further compensate for the influence of the deflection of the wind turbine blade to correct the measured distance.

The deflection angle may for example be measured or calculated. A calculation may take into account a measurement. For example, a rotational speed of the wind turbine blades may be measured, and the deflection angle may be calculated based on this measurement.

If the deflection angle is zero, i.e. parallel with the horizontal plane, then the measured distance may be equal to the actual distance (given that the pitch angle is also zero). If the deflection angle differs from zero, i.e. placed in an oblique angle relative the horizontal plane, then the measured distance differs from the actual distance.

The deflection angle may for example be defined relative to the rotor plane or relative to the vertical direction.

According to one embodiment, the method further comprises the step of measuring a rotational speed of the at least one wind turbine blade, wherein the actual deflection angle is calculated as function of at least the rotational speed.

The deflection angle may be calculated as function of the measured rotational speed of the wind turbine blade. Preferably, the deflection angle may be calculated as function of the measured rotational speed, for example based on measurements of a gyrometer, and taking into account the tilting angle of the rotor relative to the horizontal plane. For example, based on the various forces deflecting the wind turbine blade, e.g. gravity and centrifugal force.

Based on the deflection angle, the measured distance may be corrected. For example, in the case of a non-zero deflection angle, the measured distance may be corrected taking the deflection angle into account. E.g., a small deflection angle may be basis for a small correction of the measured distance, and a large deflection angle may be basis for a large correction. The correlation between the deflection angle and correction of the measured distance may for example be based on a lookup table or a mathematical function which approximates this correlation, e.g. based on trigonometric functions.

The distance sensor unit may measure the rotational speed of the wind turbine blade using a built-in gyroscope. The processor may determine a centripetal and/or a centrifugal force applied to the wind turbine blade in the rotor plane as function of the measured rotational speed, for example using the radial position.

Generally, the deflection angle of a wind turbine blade away from the rotor blade depends on the forces at play. When a blade is aligned vertically along the wind turbine tower, the defection of the wind turbine blade may for example be determined based on any of gravity, centrifugal force, mechanical forces in the blade, and wind forces such as lift and drag. A measured acceleration at the distance sensor unit is directly related to the centrifugal and the centripetal force.

The processor may, for example, determine a measured acceleration or force in the longitudinal direction of the wind turbine blade as function of the centrifugal force and the gravity force. The magnitude of the force in the longitudinal direction may for example be determined by projecting the centrifugal force and the gravity force onto a tangent line of the sensor location.

In an exemplary embodiment, a distance sensor unit is located in a wind turbine blade. When the blade has a downward orientation aligned with the wind turbine tower, the blade and the tower approximately forms a plane in which the forces can be analysed. In a rotating frame of reference, at the location of the distance sensor unit, four forces are applied: a wind force pushing the blade in in a horizontal direction, gravity pulling in a downward direction, a centrifugal force pushing away from the rotation axis, and a mechanical force in the blade in the longitudinal direction of the blade towards the rotation axis.

The deflection angle at the location of the distance sensor unit may be calculated based on gravity and the centrifugal force. The wind force cause, at least partly, the deflection of the blade, but may be omitted in a calculation of the deflection angle, since it is close to perpendicular to the longitudinal direction of the blade. However, in other embodiments, the wind force is taken into account in calculations.

The magnitude of the mechanical force in the blade in the longitudinal direction may then be approximated be calculating as the projected sum of gravity and the centrifugal force acting in the opposite direction. In mathematical terms Fm = Fc cos(Atilt+Adef) + Fg cos(Adef), where Fm is the mechanical force in the blade, Fc is the centrifugal force, Fg is the gravitational force, Atilt is the tilting angle, and Adef is the deflection angle, relative the vertical direction. By dividing with the mass, the expression can be rewritten as Acc = omega^2 r cos(Atilt+Adef) + g cos(Adef), where Acc is the measured acceleration in the longitudinal direction, omega is the angular velocity, r is the radial position, and g is the gravitational acceleration. Thus, by measuring omega, e.g. via a gyroscope, and Acc, e.g. via an accelerometer, Adef can be calculated, e.g. numerically, given that Atilt, r, and g is known (or can be measured/calculated). Thus, the deflection angle can be established via relatively simple measurements and calculations.

According to one embodiment, the method further comprises the step of waking up the distance sensor unit prior to the at least one wind turbine blade passing the wind turbine tower, where the distance sensor unit goes to sleep after the at least one wind turbine blade has passed the wind turbine tower.

The present method may continuously scan the field during rotation of the wind turbine blade, however this increases the power consumption as the distance sensor unit is in measurement mode all the time.

Preferably, the present method may reduce power consumption by only activating the distance sensor unit when the wind turbine blade is passing the wind turbine tower. Thus, the distance sensor unit is only activated within a predetermined angular interval while the distance sensor unit is deactivated for the remaining angular interval.

For example, the processor may utilise an acceleration signal from a built-in accelerometer to determine when to enter the measuring mode and when to enter the sleep mode. When the processor determines that the wind turbine blade reaches an activation threshold, the processor wakes up the distance sensor unit. The distance sensor unit may then perform a distance measurement and determine the actual distance and actual pitch angle, as mentioned above. When the processor determines that the wind turbine blade reaches a deactivation threshold, the processor powers down the distance sensor unit. This allows for minimal power consumption and thus the distance sensor unit can suitably be powered by photovoltaic cells, batteries or other suitable power sources.

Optionally, the distance sensor unit does not enter measuring mode during every full rotation of the wind turbine, e.g. the distance sensor unit enters measuring mode once every 10 rotations, to save further power. I.e., the duration of the sleep mode may be longer than the duration of a rotation of the wind turbine.

According to one embodiment, the distance sensor unit is wirelessly communicating with a receiving device preferably arranged on the wind turbine.

The present distance sensor unit may advantageously communicate with another device of the wind turbine, e.g. a receiving antenna coupled to the wind turbine controller. The measured distance, actual distance, distance profiles, and/or actual pitch angle may be transmitted to the wind turbine controller for further analysis and/or storage. Similarly, the wind turbine controller may transmit signals back to the distance sensor unit. In example, the rotational speed measured by a separate rotational speed sensor may be transmitted to the distance sensor unit. This allows the distance sensor unit to only communicate with other devices when it is activated, thereby further reducing the power consumption.

Optionally, the steps of waking up the distance sensor unit may further be based on communication with another device.

The wireless communication may be based on radio communication, infrared communication or another suitable communication technique.

The device may also be arranged separate from the wind turbine, e.g. at a remote location. Another device may also be understood as a receiving device.

According to one embodiment, the receiving device is arranged at a bottom surface of the nacelle.

At the bottom surface of the nacelle, the receiving device may have improved wireless connection to the distance sensor unit, for example while the distance sensor unit is near the wind turbine tower, which may be advantageous.

According to one embodiment, the receiving device is placed on the ground in the proximity of the wind turbine.

Accordingly, it is easily accessible, e.g. for a human operator or a wired connection, which is advantageous.

According to one embodiment, the step of correcting the measured distance is performed to obtain the tip-to-tower clearance.

According to one embodiment, the signal reflected from the wind turbine tower is based on the signal from the distance sensor unit.

According to one embodiment, the method further comprises a step of determining an angular position of the at least one wind turbine blade.

According to one embodiment, the step of correcting the measured distance is based on the angular position.

According to one embodiment, the step of waking up the distance sensor unit is based on the angular position.

The angular position may be determined by the distance sensor unit, e.g. based on a gyroscope or an accelerometer. The angular position may also be determined externally from the distance sensor unit, e.g. by the wind turbine controller, a receiving device, or other external means.

Determining the angular position may for example be used for controlling timing of a measurement, determining the actual pitch angle, and/or correcting the measured distance, and may therefore be advantageous.

According to one embodiment, the step of correcting the measured distance is further based on a tilting angle of the wind turbine.

**In** wind turbines, the rotor axis is often slightly tilted in comparison with the horizontal plane by a tilting angle The tilting angle of the wind turbine may introduce an error to the measured distance, and hence, correcting the measured distance based on the tilting angle may be advantageous.

According to one embodiment, the actual pitch angle is determined by the distance sensor unit.

According to the invention, an actual pitch angle is determined. Determining the actual pitch angle in the distance sensor unit may be advantageous, since this may reduce the amount of wireless communication or calculations required. The distance sensor unit may thus, for example, perform one-way communication, which in turn may reduce power consumption. However, note that embodiments of the invention are not restricted to one-way communication, and some embodiments may also facilitate bidirectional communication.

According to one embodiment, the actual pitch angle is determined externally from the distance sensor unit, for example by a wind turbine controller of the wind turbine.

By determining the actual pitch angle externally, additional information, such as external information, such as the pitch angle at the pitch bearing system, may be included in determining the actual pitch angle, which is advantageous.

According to the invention, the actual pitch angle is different from a measured pitch angle, wherein the measured pitch angle is measured at a pitch bearing system of the wind turbine.

This may particularly be the case during strong winds, where the blade may twist or flex. Correcting the measured distance based on an actual pitch angle is particularly important when the blade measured pitch angle and the actual pitch angle are different from each other.

According to one embodiment, the method comprises a step controlling the actual pitch angle based on the measured distance.

According to one embodiment, the method comprises a step of braking the wind turbine based on the measured distance.

Controlling the pitch angle or braking the wind turbine based on the measured distance may ensure reducing risk of accidents which is advantageous. In some embodiments, the pitch angle may actually be controlled or changed to improve the power production of the wind turbine. For example, if the actual pitch angle is very different from the measured pitch angle, then the pitch angle may be changed to optimize power production. Or if the corrected distance is above a safety margin, this may allow the wind turbine to continue power production, despite strong winds, which would otherwise force the wind turbine to stop, e.g. since wind speeds are above a cut-out wind speed. Accordingly, at high wind allowing the wind turbine to produce at its rated power the production of the wind turbine may be derated i.e. pitch angle may be regulated according to the calculated actual distance.

According to one embodiment, the method comprises a step of controlling an auxiliary wind turbine based on the measured distance.

In wind farms, several wind turbines may be exposed to approximately similar conditions. Thus, the measured distance between the wind turbine blade and the wind turbine tower of one wind turbine may be indicative of this distance at another wind turbine. Thus, the measured distance may be communicated, e.g. via a receiving device, allowing other wind turbines to be controlled based on this information, which is advantageous. If a wind turbine placed upwind to another wind turbine registers a wind gust, it is especially advantage if communication of such wind gust is made to the down wind turbine.

According to one embodiment, the method comprises a step of performing predictive maintenance.

The predictive maintenance may for example be performed based on the corrected measured distance, the actual pitch angle and/or the deflection angle, which may be indicative of the status of the blade. Thus, predictive maintenance may for example be replacement of a blade. Predictive maintenance may also be dismantling the wind turbine.

According to one embodiment, the wind turbine is placed on a floating foundation, wherein the step of correcting the measured distance is based on a wind turbine tower angle of the wind turbine tower.

Wind turbine placed on a floating foundation may be affected by current and wave loads acting on the floating foundation. This may for example affect the wind turbine tower angle of the wind turbine tower, e.g. the angle which the wind turbine tower has relative to gravity. This angle is typically approximately 0 degrees, but may become non-zero due to, e.g., waves. This may affect the correction which needs to be performed to the measured distance to obtain an accurate tip-to-tower clearance. Thus, taking the wind turbine tower angle into account is advantageous. In practice, this may for example be implemented by as a correction to the angles in the calculations, e.g. a correction to the tilt angle, angle of gravity, deflection angle etc. The wind turbine tower angle may for example be measured independently or by the distance sensor unit.

According to one embodiment, a radial position of the distance sensor unit is established based on gyroscope measurements and acceleration measurements.

For example, a gyroscope measurement may provide the rotational speed of the wind turbine blade, and the acceleration measurement is indicative of the centripetal force, which in combination with the rotational speed is indicative of the radial position of the distance sensor unit. The radial position may in turn be indicative of the deflection of the blade. Thus, establishing a radial position is advantageous.

According to one embodiment, the signal transmitted from the distance sensor unit has a frequency of approximately 24 GHz, for example between 23 GHz and 25 GHz.

This is advantageous, since the 24 GHz band is currently permitted for use by the European Telecommunication Standards Institute.

According to one embodiment, the signal transmitted from the distance sensor unit has a frequency of from 50 GHz to 80 GHz, for example a frequency from 60 GHz to 70 GHz.

Frequencies from 60 GHz to 70 GHz has a wavelength suitable for accurately determining a distance, which is advantageous. Such frequencies further allows employing methods for detecting distances to stationary targets.

According to one embodiment, the step of determining a distance is based on frequency shift keying.

Frequency shift keying is a frequency modulation scheme in which a distance to a moving target may be determined. The distance may for example be determined as R = c phi / (4 pi (fa - fb) ), where R is the distance, c is the speed of light, phi is a phase shift, and fa and fb are two frequencies sequentially sent by the transmitter.

According to one embodiment, the method further comprises a step of measuring one or more blade eigenfrequencies of the at least one wind turbine blade.

The blade eigenfrequencies may for example be determined by an accelerometer of the distance sensor unit. Eigenfrequencies may also be understood as natural frequencies. One or more eigenfrequencies may also be an vibrational spectrum, for example obtained through a Fourier transformation of a measured acceleration,

The blade eigenfrequencies may for example be eigenfrequencies of edge-wise and/or flap-wise vibrations of the wind turbine blade.

The blade eigenfrequencies may for example be indicative of the structural integrity of the wind turbine blade, and accordingly, the eigenfrequencies are advantageous to measure.

According to one embodiment, the method further comprises a step of comparing the one or more eigenfrequencies with one or more model eigenfrequencies.

The measured eigenfrequencies may for example be compared to a model eigenfrequencies, e.g. based on a model of the wind turbine blade.

By performing a comparison, it is possible to assess the mechanical state and integrity of wind turbine blade in detail, for example to see if the blade is worn.

Further, since wind turbines of different types exist, it may not be possible to implement a universal analysis of one or more measured blade eigenfrequencies. Accordingly, a comparison with model eigenfrequencies of the relevant wind turbine type may be advantageous.

According to one embodiment, the step of transmitting a signal is based on the step of comparing the one or more blade eigenfrequencies.

The eigenfrequencies may be indicative of whether a distance measurement is necessary. Thus, be basing the transmission of a signal on the eigenfrequencies, it may be possible to reduce the number or distance measurements which are required, which is advantageous.

According to one embodiment, the one or more blade eigenfrequencies are communicated wirelessly to the receiving device.

By communicating the one or more eigenfrequencies, these can be analysed externally, even remotely, which is advantageous. For example, eigenfrequencies of wind turbine blades of several wind turbines may be compared, which may improve an analysis and allow deviations of eigenfrequencies to be spotted. This may for example allow predictive maintenance.

According to one embodiment, the method further comprises a step of activating an alarm based on the one or more blade eigenfrequencies.

By monitoring blade eigenfrequencies, it may possible to prevent error or damage to the blade or the wind turbine, which is advantageous. Preferably, the alarm is provided to a human operator, which can then act based on the alarm.

According to one embodiment, the method further comprises a step of providing a measurement quality factor based on the one or more blade eigenfrequencies.

Since eigenfrequencies may be indicative of the state of the wind turbine blade, the may further be indicative of the quality of the measurement generated by transmitting, measuring, determining and correcting a distance. A measurement quality factor may for example be provided to a remote location, for example to a human operator, it may be used at the site of the wind turbine, or within the distance sensor unit. It may be used for detailed analysis of the state of the wind turbine blade, or it may be used in an automatic algorithm or calculation, e.g. for providing a tip-to-tower clearance, or an indication of a deflection. Thus, providing a measurement quality factor is advantageous.

An object of the invention is also achieved by a distance sensor unit for determining a tip-to-tower clearance of a wind turbine, as defined in claim 8, the wind turbine comprising a wind turbine tower, a nacelle arranged on top of the wind turbine tower, and a rotatable rotor with at least one wind turbine blades arranged relative to the nacelle, wherein the distance sensor unit is arranged to be located on the at least one wind turbine blade, wherein the distance sensor unit comprises a transmitter and a receiver, wherein the transmitter is configured to transmit a signal toward the wind turbine tower and the receiver is configured to measure a signal reflected from the wind turbine tower, wherein the distance sensor unit further comprises a processor configured to determine a distance between the wind turbine tower and the at least one wind turbine blade based on the transmitted signal and the reflected signal, wherein the distance sensor unit further comprises an accelerometer, wherein the processor is further configured to correct the measured distance based at least one of an actual pitch angle and a deflection angle of the at least one wind turbine blade at the location of the distance sensor unit, wherein the actual pitch angle is different from a measured pitch angle, wherein the actual pitch angle is determined based on measurements of acceleration from the accelerometer, and wherein the measured pitch angle is measured at a pitch bearing system of the wind turbine.

This provides a distance sensor unit with increased functionality as it is able to determine an actual clearance between the wind turbine blade and the wind turbine tower and preferably also an actual pitch angle of the sensor location. The present distance sensor unit provides a reliable distance detection and allows for a reduced safety margin and thus an increased power production.

A distance sensor unit according to the invention may have any of the above advantages.

The use of a non-contact measuring technique allows the present distance sensor unit to be shaped as a small compact sensor that allows for a simple installation and with a non-prohibitive cost to ensure a large-scale production.

According to one embodiment, the distance sensor unit further comprises a local power source, e.g. one or more photovoltaic cells, configured to provide power to the electrical components of the distance sensor unit.

Preferably, the distance sensor unit may be configured as a self-powered unit which is isolated from the rest of the electrical network of the wind turbine. In example, the distance sensor unit may comprise a battery pack, photovoltaic cells or another suitable power source. The photovoltaic cells may alternatively be arranged on the blade surface, or embedded in the wind turbine blade, and electrically connected to the distance sensor unit. This makes the distance sensor very resistant to lightning strikes as it has a floating potential as it is not connected to any ground paths of the wind turbine.

Conventional distance sensors are wired to the ground path of the wind turbine, thus making them susceptible to lightning strikes. Furthermore, such wired sensors require a more complex installation and require an opening through the blade shell.

According to one embodiment, the distance sensor unit is configured as a small self-powered sensor unit, which is optionally embedded or integrated into the at least one wind turbine blade.

The present distance sensor unit may suitable be installed on new wind turbine blades as well as retrofitted onto existing wind turbine blades. The present distance sensor may be mounted directly on the blade surface, or positioned in a recess in the blade surface. The top of the sensor unit may be flushed with the blade surface, or project partly out of the recess. Alternatively, the present distance sensor unit may be embedded into the blade shell or be arranged inside the wind turbine blade. Further, the present distance sensor unit may also be installed on the wind turbine tower.

The present distance sensor unit has a low power consumption, thus allowing it to be manufactured as a small compact unit with its own power supply. Unlike conventional distance sensor units which do not have their own power source and thus require a wired connection with the power supply of the wind turbine.

According to one embodiment, the distance sensor unit further comprises a gyroscope configured to measure the rotational speed of the at least one wind turbine blade.

The present distance sensor unit may preferably comprise a gyroscope configured to measure at least a rotational speed of the wind turbine blade. The use of a gyroscope allows the processor of the distance sensor unit to compensate for the influence of the pitch angle and of the deflection of the wind turbine blade. Thus, allowing for a more accurate detection of the actual distance as well as a detection of the actual pitch angle.

According to one embodiment, the distance sensor unit further comprises at least one accelerometer configured to measure an acceleration of the at least one wind turbine blade.

The present distance sensor unit comprises one or more accelerometers configured to measure acceleration of the wind turbine blade at the location of the distance sensor unit. The accelerometer may measure acceleration in one or more axes. Typically, one of the axes is aligned in the longitudinal direction of the blade, but embodiments of the invention are not limited to this.

Based on the measured acceleration, the rotational angle of the wind turbine blade may be established. The acceleration signal may be used to wake up the distance sensor unit when the wind turbine blade may be within a few degrees of the wind turbine tower. The acceleration signal may further be used to power down the distance sensor unit when the wind turbine blade may have moved a few degrees away from the wind turbine tower. This saves power and allows for the manufacture of a small self-powered sensor unit.

The acceleration may also be used to establish the deflection or the radial position of the distance sensor unit.

According to one embodiment, the transmitter and the receiver form a radar measuring system, a LIDAR measuring system or an ultrasound measuring system.

The present distance sensor unit uses a transmitter and a receiver, or a combined transceiver, to transmit a signal and measure the reflected signal. The processor may optionally use the Doppler shift between the transmitted signal and the reflected signal to determine the measured distance.

The transmitter and the receiver may form a radar measuring system, where the transmitted signal may be a radar beam signal. The characteristic parameters of the transmitted signal may be used to determine the phase between the two signals, which in turn is used to determine the measured distance. A radar measuring system is particularly advantageous, since it may not be susceptible to errors e.g. from weather conditions such as rain.

The transmitter and the receiver may alternatively form a LIDAR measuring system, where the transmitted signal is a pulse signal. The time, i.e. time of flight, from transmitting the pulse signal to receiving the reflected signal may be used to determine the measured distance. The LIDAR measuring system may use other techniques such as optical mixers enabling frequency modulating techniques.

The transmitter and the receiver may form an ultrasonic measuring system, where the transmitted signal may be a sound signal. Such ultrasonic measuring techniques are known and are less prone to rain, dust and mist.

According to one embodiment, the distance sensor unit comprises a memory.

According to one embodiment, the transmitter and the receiver are combined in a transceiver unit.

An object of the invention is also achieved by a wind turbine, as defined in claim 11, the wind turbine comprising a wind turbine tower, a nacelle arranged on top of the wind turbine tower, a rotatable rotor with at least one wind turbine blade arranged relative to the nacelle, and a distance sensor unit arranged on the at least one wind turbine blade, wherein the distance sensor unit comprises a transmitter and a receiver, wherein the transmitter is configured to transmit a signal toward the wind turbine tower and the receiver is configured to measure a signal reflected from the wind turbine tower, wherein the distance sensor unit further comprises a processor configured to determine a distance between the wind turbine tower and the at least one wind turbine blade based on the transmitted signal and the reflected signal, wherein the distance sensor unit further comprises an accelerometer, wherein the processor is further configured to correct the measured distance based on at least one of an actual pitch angle and a deflection angle of the at least one wind turbine blade at a location of the distance sensor unit on the at least one wind turbine blade wherein the actual pitch angle is different from a measured pitch angle, wherein the actual pitch angle is determined based on measurements of acceleration from the accelerometer, and wherein the measured pitch angle is measured at a pitch bearing system of the wind turbine.

A wind turbine according to the invention may have any of the above presented advantages.

The wind turbine may comprise any number of wind turbine blade, preferably one, two, three or more wind turbine blades. A distance sensor unit may in example be arranged on at least one of the wind turbine blades, preferably all wind turbine blades. Note, that distance sensor units of the wind turbine blades may use the same receiving device / data process located in or at the wind turbine tower or nacelle
According to one embodiment, the distance sensor unit is installed at least 0.5 meter from a tip of the at least one wind turbine blade, for example at least 1 meter from the tip, for example at least 2 meters, for example at least 3 meters, such as at least 5 meters.

This may be advantageous for protecting the distance sensor unit from lightning strikes.

Since the distance sensor unit is not necessarily located at the very tip of the wind turbine blade, its estimate of the tip-to-tower distance may include compensation accounting for the part of the wind turbine blade which extends beyond the distance sensor unit.

According to an embodiment, the distance sensor unit is installed at least 0.5 meter from a receptor located in the at least one wind turbine blade, for example at least 1 meter from the receptor, for example at least 2 meters from the receptor, for example at least 3 meters from the receptor, such as at least 5 meters from the receptor.

This is advantageous in that receptors are often exposed to strokes of lightnings and thereby large currents are induced in the down conductors inside the wind turbine blades connecting the receptors to the ground via the hub, nacelle and tower or components thereof.

According to an embodiment, the distance sensor unit is installed at least 0.5 meter from a down conductor located in the at least one wind turbine blade, for example at least 1 meter from the down conductor, such as at least 2 meters from the down conductor.

The location of the distance sensor unit as distant from the receptors and down conductors connected thereto as possible is advantages in that the risk of disturbances or damages from induced lightning current is reduced. At the same time the distance sensor unit should be located at close to the tip of the blade as possible to be able to determine the actual distance between tip and tower as correct as possible.

According to one embodiment, the at least one wind turbine blade is a plurality of wind turbine blades, wherein the distance sensor unit is a distance sensor unit of a plurality of distance sensor units arranged on the plurality of wind turbine blades.

Thus, in some embodiments, several distance sensor units are located on several wind turbine blades, e.g. a first distance sensor unit on a first wind turbine blade, and a second distance sensor unit on a second wind turbine blade etc. Using several distance sensor units allows surveillance of multiple blades and their distances to the wind turbine tower, which is advantageous. Particularly, it further allows monitoring differences between the distances measured at the different blades, which may be indicative of wear, damage, or errors.

According to one embodiment, the distance sensor unit is a distance sensor unit of a plurality of distance sensor units arranged on one wind turbine blade of the at least one wind turbine blade

By having several distance sensor units arranged on the same wind turbine blade, for example spaced along the longitudinal direction of the blade, it is possible to improve the measurements and corrections of the blade. E.g., by obtaining a distance of the blade at two different radial positions, the shape of the curvature of the blade away from the rotational plane can be established more precisely, which in turn can be used to improve an estimate of the tip-to-tower clearance, particularly since a distance sensor unit is not located at the very tip of the blade to reduce the risk of damage due to lightning strikes. The shape of the curvature of the blade away from the rotational plane can further be used to establish if the blade requires maintenance of replacement.

According to one embodiment, the distance sensor unit is powered through a power connection to the nacelle.

Thus, it may not need to be self-powered, which may, for example, be advantageous in geographical regions where photovoltaic cells may not be reliable due to periods of little light from the sun.

Deflection of a wind turbine blade may be determined by a method comprising the steps of:
measuring at least one sensor acceleration in at least one acceleration direction relative to a sensor unit location on the wind turbine blade, wherein the sensor unit location has a radial position relative to a rotation axis of a rotatable rotor of the wind turbine; and
calculating the deflection based on the at least one sensor acceleration.

Thus, in an embodiment, the deflection of a wind turbine blade is measured via an accelerometer, without necessarily relying on transmitting and receiving a signal reflected from the wind turbine tower.

The measured acceleration can be converted to a blade deflection using various approaches.

In typical embodiments, the deflection is measured while the blade points downward, but the invention is not limited to any particular measurement schemes.

In an embodiment, the deflection is indicative of a deflection angle.

In an embodiment, the deflection is indicative of a tip-to-tower distance.

In an embodiment, the step of measuring the at least one sensor acceleration is performed discontinuously within a roundtrip of the wind turbine blade.

By measuring discontinuously, in contrast to measuring continuously, it is possible to reduce processing and power consumption, which is advantageous. Measuring discontinuously may for example be understood as having a part of each roundtrip in which the distance sensor unit is powered off. In some embodiments, the distance sensor unit measures less than once per roundtrip, for example less than once every second roundtrip, every third roundtrip, every tenth roundtrip, every hundredth roundtrip etc.

In an embodiment, the step of measuring the at least one sensor acceleration is performed while the wind turbine blade is below a horizontal position of the wind turbine blade.

In an embodiment, the step of measuring at least one sensor acceleration is performed while the wind turbine blade is in a downwards orientation, for example wherein the wind turbine blade is within an angle of 10 degrees of a horizontal direction.

It is when the blade is nearest the wind turbine tower that the deflection and the tip-to-tower distance is most important. Thus, restricting measurements to this region may save power, without compromising safety, which is advantageous.

In an embodiment, the at least one sensor acceleration in the at least one acceleration direction is three sensor accelerations in three acceleration directions.

By measuring accelerations in several directions, more complex analyses may be performed, which is advantageous.

In an embodiment, the at least one sensor acceleration is less than three sensor accelerations, for example two sensor accelerations or one sensor acceleration.

Basing the analysis on less than three accelerations simplifies the method, which is advantageous.

In an embodiment, the step of calculating the deflection is performed by integrating the at least one sensor acceleration twice over time.

By integrating the acceleration twice, a distance may be obtained, given an initial position and velocity, which is advantageous. Since such calculations are susceptible to gradual errors and drifts, the obtained position may be corrected continuously or periodically. Such a correction may be implemented by a separate distance measurement to the wind turbine tower, or by further analysis of the measured accelerations, e.g. to establish a radial position, a deflection, and/or an angular position of the blade.

In an embodiment, the method further comprises a step of determining an angular velocity at the sensor unit location around the rotation axis, wherein the step of calculating the deflection is further based on the angular velocity.

In an embodiment, the method comprises a step of calculating the centripetal acceleration at an undeflected radial position based on the angular velocity.

The centripetal acceleration is given by Acen = r omaga^2, where r is the radial position and omega is the angular velocity. Correspondingly, by measuring a centripetal or centrifugal acceleration and an angular velocity, it is possible to calculate the radial position r. The radial position may change when the blade is deflected, and thus the calculated radial position is indicative of the deflection. Optionally, the radial position may be compared to an undeflected radial position. The angular velocity may for example be establish using a gyroscope or based on information from the wind turbine controller.

In an embodiment, the method comprises a step of calculating a centripetal acceleration at the sensor unit location based on the at least one acceleration.

In an embodiment, the at least one sensor acceleration in the at least one acceleration direction is at least two sensor accelerations in at least two acceleration directions, wherein the step of calculating a centripetal acceleration is based comparing one of the at least two sensor accelerations with one other of the at least two sensor accelerations.

The relative magnitude of two accelerations in two different directions may be indicative of the orientation or angular orientation of the blade, e.g. at the sensor unit location. Such an angular orientation may be indicative of the deflection and is thus advantageous to compare two sensor accelerations.

In an embodiment, the at least one sensor acceleration in the at least one acceleration direction is at least two sensor accelerations in at least two acceleration directions, wherein the step of calculating a centripetal acceleration is based on a calculating an acceleration vector based on the at least two sensor accelerations, wherein the step of calculating the deflection is based on comparing at least one of the at least two sensor accelerations with the acceleration vector

By measuring two or three accelerations, it is possible to establish an acceleration vector, taking both directions and magnitudes into account. The individually measured sensor components may then be compared to this vector, for example to estimate an angular orientation of the wind turbine blade at the sensor unit location., which is advantageous.

In an embodiment, the radial position is determined based on the at least one sensor acceleration and the angular velocity, wherein the step of calculating the deflection is based on comparing the radial position with an undeflected radial position.

In an embodiment, an acceleration direction of the at least one acceleration direction is at least partly in a longitudinal direction of the wind turbine blade.

Having an acceleration direction in a longitudinal direction of the blade is advantageous, since this enables some types of calculations of the deflection.

In an embodiment, the step of calculating the deflection is based on a comparison of the at least one sensor acceleration with a sum of gravitational acceleration projected onto the longitudinal direction and centrifugal acceleration projected onto the longitudinal direction.

**In** an embodiment, the method comprises a step of determining one or more blade eigenfrequencies based on the at least one sensor acceleration.

The blade eigenfrequencies may be indicative of the state of the blade, an may thus be indicative of the deflection, and/or the quality of the deflection measurement, which is advantageous.

In an embodiment, the at least one sensor acceleration in the at least one acceleration direction is at least two sensor accelerations in at least two acceleration directions, wherein the at least two acceleration directions are different directions.

In an embodiment, the step of determining the deflection is based on a correlation between the at least one sensor acceleration and the deflection.

For example, a correlation between one or more measured accelerations and corresponding deflections may be established or preprogramed. And when the wind turbine is in operation, the correlation may then be used to establish a deflection, which is advantageous.

In an embodiment, the method comprises incorporating a compensation for gravitational acceleration in the step of calculating the deflection.

The direction of gravity may for example be established using a gyroscope, whereas the magnitude is typically well-known. Using this, gravity may for example be subtracted from the measured one or more accelerations, taking orientation into account. For example, such that the remaining accelerations, after subtractions, are indicative primarily of centrifugal/centripetal acceleration, and not gravity.

In an embodiment, the step of measuring at least one sensor acceleration is performed as the wind turbine blade is approximately parallel to gravity.

In an embodiment, the step of measuring at least one sensor acceleration is performed as the wind turbine blade is approximately perpendicular to gravity.

This parallel or perpendicular angles simplifies gravity compensation calculations, which is advantageous.

In an embodiment, the method further comprises a step of measuring an angular orientation of the wind turbine blade at the sensor unit location, wherein the step of calculating the deflection is based on the angular orientation.

An angular orientation may for example be understood as the orientation of the wind turbine blade at the sensor unit location relative to gravity. For example, the orientation of a distance sensor unit relative to gravity, for example as established by measurements from a gyroscope.

In an embodiment, the angular orientation is based on the at least one sensor acceleration in the at least one acceleration direction.

In an embodiment, the method comprises a step of performing a gyroscope measurement.

In an embodiment, the angular orientation is based on the gyroscope measurement.

In an embodiment, the deflection is calculated based on the gyroscope measurement, but independently of acceleration measurements.

An angular orientation may typically be indicative of the deflection of the wind turbine blade, and measuring an angular orientation is thus advantageous.

In some embodiments of the invention, several of the above indicated approaches for establishing a deflection are used or even combined to establish one single deflection. For example, a first representation of the deflection may be calculated based on a comparison of the at least one sensor acceleration with a sum of gravitational acceleration projected onto the longitudinal direction and centrifugal acceleration projected onto the longitudinal direction. And a second representation of the deflection may be calculated based on the gyroscope. And a deflection is the established based on both the first and the second representation, e.g. as a weighted average.

Monitoring of a wind turbine blade may be done according to a method comprising the steps of:
measuring one or more sensor accelerations in one or more acceleration directions relative to a sensor unit location on the wind turbine blade, wherein the sensor unit location has a radial position relative to a rotation axis of a rotatable rotor of the wind turbine, wherein the one or more acceleration directions are respectively associated with the one or more sensor accelerations, wherein the step of measuring the one or more sensor accelerations is performed continuously in a measurement time period to obtain an acceleration data sample; and
analysing the acceleration data sample to obtain a frequency composition of the acceleration data sample, wherein the frequency composition is indicative of one or more blade eigenfrequencies of the wind turbine blade.

Monitoring the wind turbine blade may be performed by monitoring eigenfrequencies of the blade. The eigenfrequencies may be indicative of the state of the blade, of structural damages of the blade, or of deflections of the blade, and are thus advantageous to monitor. Since the eigenfrequencies depends strongly on the type of wind turbine and the type of wind turbine blade, the actual eigenfrequencies vary from turbine to turbine. The relevant eigenfrequencies are typically on the order of Hz, but the invention is not restricted to any particular frequencies.

In some embodiments, a blade has several sensor units for more efficiently determining eigenfrequencies and vibrational modes of that blade.

In an embodiment, the method comprises a step of communicating information indicative of the acceleration data sample to a remote location.

Communicating the information is advantageous, since it allows comparison of information from several wind turbines, and since it allows further analysis, e.g. by a human operator.

In an embodiment, the step of analysing the acceleration data sample is based on applying a Fourier transformation.

In an embodiment, the step of analysing the acceleration data sample is performed at the sensor unit location.

In an embodiment, the step of analysing the acceleration data sample is performed in a wind turbine controller of the wind turbine.

In an embodiment, the step of analysing the acceleration data sample is performed on the remote location.

In an embodiment, the method comprises a step of evaluating the one or more blade eigenfrequencies.

In an embodiment, the step of evaluating the one or more blade eigenfrequencies comprises detecting changes in magnitude of the one or more blade eigenfrequencies.

In an embodiment, the step of evaluating the one or more blade eigenfrequencies comprises detecting changes in frequency of the one or more blade eigenfrequencies.

In an embodiment, the step of evaluating the one or more blade eigenfrequencies comprises detecting reduction of frequency of the one or more blade eigenfrequencies.

In an embodiment, the step of evaluating the one or more blade eigenfrequencies comprises detecting relative frequencies of the one or more blade eigenfrequencies.

In an embodiment, the step of evaluating the one or more blade eigenfrequencies comprises detecting relative magnitudes of the one or more blade eigenfrequencies.

A change of magnitude may be indicative of a state of the blade, or damage, and is thus advantageous to evaluate. Similarly, a change of frequency may be indicative of a state of the blade, or damage, and is thus advantageous to evaluate. Thus, such changes or relative changes are advantageous to monitor.

In an embodiment, the step of evaluating the one or more blade eigenfrequencies comprises establishing the presence of one or more vibrational modes of the wind turbine blade.

In an embodiment, the step of evaluating the one or more blade eigenfrequencies comprises establishing a magnitude of the one or more vibrational modes.

From one or more eigenfrequencies, one or more vibrational modes may be deduced. The presence of such modes may provide information about the state of the blade or damage, which is advantageous. The vibrational modes may for example be established based on computer models of the blade.

In an embodiment, the step of evaluating the one or more blade eigenfrequencies comprises comparing the one or more blade eigenfrequencies with one or more model eigenfrequencies.

A comparison between observed modes and theoretical modes may indicate the state or damage of the blade, which is advantageous.

In an embodiment, the step of evaluating the one or more blade eigenfrequencies comprises locating a structural damage of the blade based on the one or more blade eigenfrequencies.

A structural damage of the blade may significantly alter the eigenfrequencies and the vibrational modes of the blade. Thus, by evaluating the eigenfrequencies, it is possible to detect the presence of damage, and optionally even locate it, which is advantageous.

A method for monitoring the actual pitch angle of a wind turbine blade of a wind turbine is described, the method comprising the steps of:
transmitting a signal from a distance sensor unit, comprising a processor, towards a wind turbine tower of the wind turbine, wherein the distance sensor unit is located in a sensor unit location on the wind turbine blade;
measuring a signal reflected from the wind turbine tower to obtain a measured signal, wherein the signal reflected from the wind turbine tower is based on the step of transmitting a signal; and
determining an actual pitch angle at the sensor unit location, the actual pitch angle is determined based on a distance profile that is established by the processor based on multiple distance measurements that is performed by the processor by scanning of a measuring field, the measuring field at least covers an area in front of the distance sensor unit (10) in which the tower is or is going to be reflected, wherein the actual pitch angle at the sensor unit location is different from a pitch angle at a pitch bearing system of the wind turbine.

In an embodiment of this method the step of determining an actual pitch angle of the wind turbine blade is based on the timing of receiving the measured signal.

Although the disclosure has described using the actual pitch angle for correcting a measured distance, determining the actual pitch angle in itself may be advantageous. It may for example indicate to which degree the blade twists, or whether the pitch bearing system is incorrectly calibrated.

### Description of the Drawing

The invention is described by example only and with reference to the drawings, wherein:
- Fig. 1: shows an exemplary wind turbine,
- Fig. 2: shows a wind turbine with a distance sensor unit and a receiving device,
- Fig. 3: shows an exemplary configuration of the distance sensor unit and the receiving device
- Fig. 4: shows the wind turbine with the distance sensor unit integrated into the blade body,
- Fig. 5: shows the tip section of the wind turbine shown in fig. 4,
- Fig. 6: shows a cross-sectional view of the tip section shown in fig. 5,
- Fig. 7: shows a top view of the wind turbine tower and two measured distance profiles at different pitch angles,
- Fig. 8: shows a distance measurement between the wind turbine blade and the wind turbine tower with a pitch angle,
- Fig. 9: shows a distance measurement between the wind turbine blade and the wind turbine tower with a deflection angle, and
- Fig. 10: shows an exemplary series of distance measurements from which a distance profile may be determined.

In the following text, the figures will be described one by one and the different parts and positions seen in the figures will be numbered with the same numbers in the different figures. Not all parts and positions indicated in a specific figure will necessarily be discussed together with that figure.

### Reference list

- 1: Wind turbine
- 2: Wind turbine tower
- 3: Nacelle
- 4: Rotor
- 5: Wind turbine blades
- 6: Hub
- 7: Distance sensor unit
- 8: Receiving device
- 9: Radar measuring system
- 9a: Transmitter
- 9b: Receiver
- 10: Processor
- 11: Accelerometer
- 12: Battery
- 13: Photovoltaic cells
- 14: Gyroscope
- 15: Radio transceiver
- 16: Radio transceiver
- 17: Controller, local controller
- 18: Recess
- 19: Distance profiles
- 20: Pitch angles
- 21: Chord line
- 22: Rotor plane
- 23: Deflection angle
- 24: Longitudinal direction
- 25: Centripetal force
- 26: Gravity force
- 27: Tilting angle
- 28: Distance measurement
- D: Distance

### Detailed Description of the Invention

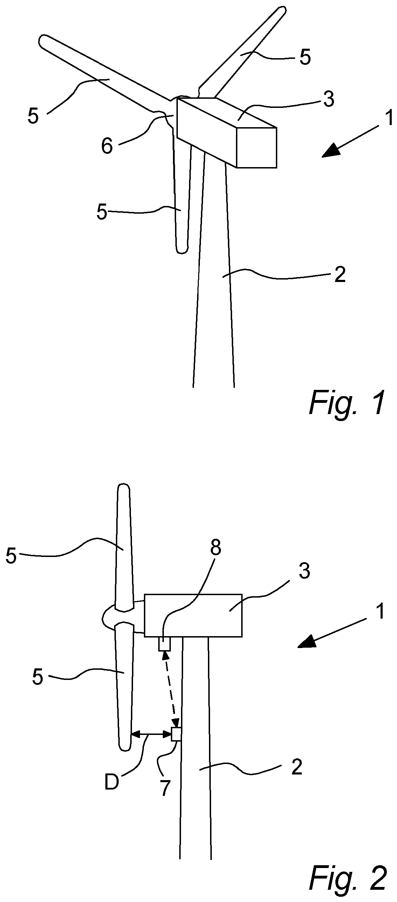

Fig. 1 shows an exemplary wind turbine 1 with a rotor assembly. The wind turbine 1 comprises a wind turbine tower 2, a nacelle 3 arranged on top of the wind turbine tower 2. A yaw system comprising a yaw bearing unit is arranged between the wind turbine tower 2 and the nacelle 3. A rotor 4 is arranged relative to the nacelle 3 and is rotatably connected to a drive train (not shown) arranged inside the nacelle 3. At least two wind turbine blades 5, here three are shown, are mounted to a hub 6 of the rotor 4.

Each wind turbine blade 5 comprises an aerodynamically shaped body extending from a blade root to a tip end and further from a leading edge to a trailing edge. The wind turbine blades are here shown as full-span pitchable blades, alternatively fixed full-span blades may be used instead. A pitch system comprising at least a pitch bearing unit is arranged between the hub 6 and the blade root of the wind turbine blade 5.

Fig. 2 shows a wind turbine 1 with a distance sensor unit 7 and a receiving device 8. The distance sensor unit 7 is installed on the wind turbine tower 2 and configured to measure the distance, D, between one wind turbine blade 5 as it passes the wind turbine tower 2 in the lowermost position using a non-contact measuring technique.

The receiving device 8 is configured to communicate with the distance sensor unit 7 via a wireless communications link. The receiving device 8 is preferably arranged at the hub 6. However, the receiving device 8 may also be arranged in other locations on the wind turbine 1, e.g. at the top of the wind turbine tower 2, or at a location separate from the wind turbine 1.

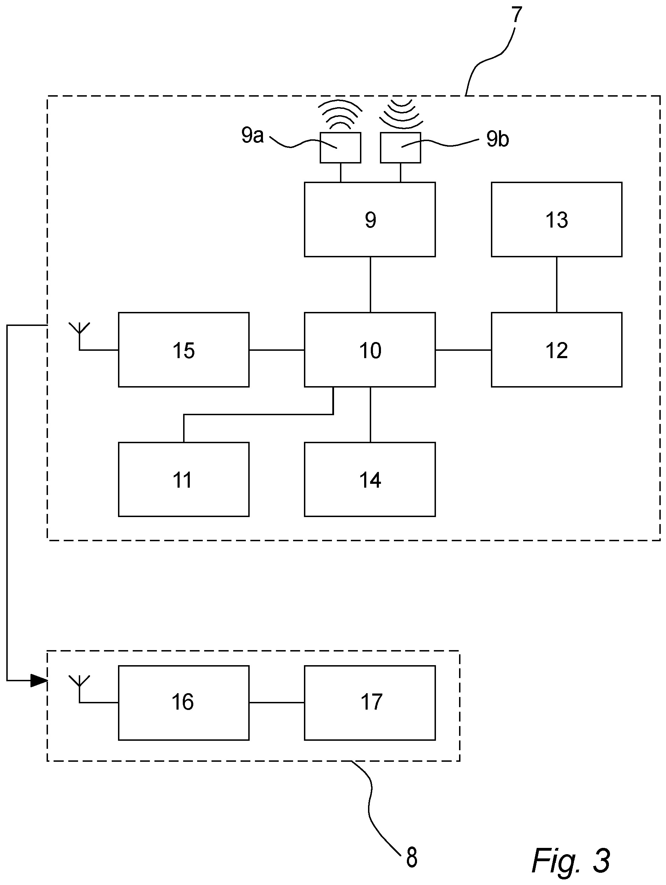

Fig. 3 shows an exemplary configuration of the distance sensor unit 7 and the receiving device 8. The distance sensor unit 7 comprises a radar measuring system 9 having a transmitter 9a and a receiver 9b. The transmitter 9a is configured to transmit a signal, e.g. a radar beam, with a measuring field. The receiver 9b is configured to receive a reflected signal, e.g. a reflected radar beam.

The distance sensor unit 7 further comprises a processor 10 configured to determine an actual distance based on the transmitted signal and the reflected signal, e.g. using a Doppler shift or a time-of-flight measurement. The processor 10 is further configured to determine an actual pitch angle of wind turbine blade 5 at the sensor location.

An accelerometer 11 is built into the distance sensor unit 7 and an acceleration signal is inputted to the processor 10. The processor 10 analyses the acceleration signal to determine the angular position of each wind turbine blade 5. When one wind turbine blade 5 is in a first angular position, the distance sensor unit 7 wakes up and the distance sensor unit 7 performs a distance measurement. When the one wind turbine blade 5 is in a second angular position, the distance sensor unit 7 is powered down.

The distance sensor unit 7 comprises its own power source. Here, the power source is a rechargeable battery 12 or a super capacitor connected to photovoltaic cells 13. The distance sensor unit 7 is hence shaped as a small compact sensor that is self-powered.

A gyroscope 14 is further built into the distance sensor unit 7. The gyroscope 14 is configured to measure the rotational speed of the wind turbine blade 5 and input the measured rotational speed to the processor 10. The measured rotational speed may be used to determine the actual distance between the wind turbine blade 5 and the wind turbine tower 2, for example in combination with any of the acceleration, rotational speed, radial position, and angular position. For example by using the rotational speed to estimate the centrifugal/centripetal force. The gyroscope 14 may also be used in combination with the accelerometer 11 to determine the angular position and/or the rotational speed.

The distance sensor unit 7 may further comprise a radio transceiver 15 configured to communicate with a radio transceiver 16 of the receiving device 8. The radio transceivers 15, 16 are able to exchange data via radio signals. The radio transceiver 16 of the receiving device 8 is further connected to a local controller 17. The controller 17 (also referred to as an external data processor) may instead be implemented as part of the local wind turbine controller used to control the operation of the wind turbine 1. Thus, processing, if any, may also be performed externally from the distance sensor unit.

In this embodiment, the distance sensor unit thus determines and corrects a distance. In some other embodiments of the invention, the distance sensor unit measures a distance and transmits this measured distance to a receiving device, and subsequently, the receiving device corrects the measured distance based on an actual pitch angle and/or deflection angle.

In some embodiments of the invention, the method is further based on storing data in a memory unit, for example a memory unit located in the distance sensor unit for storing measurements and corrections. A memory unit may for example be a digital storage associated with the distance sensor unit or a data process external to the distance sensor unit, a data processor which may communicate with the distance sensor unit and perform or assist in performing the calculation of the actual distance, actual pitch angle, rotor speed, etc.

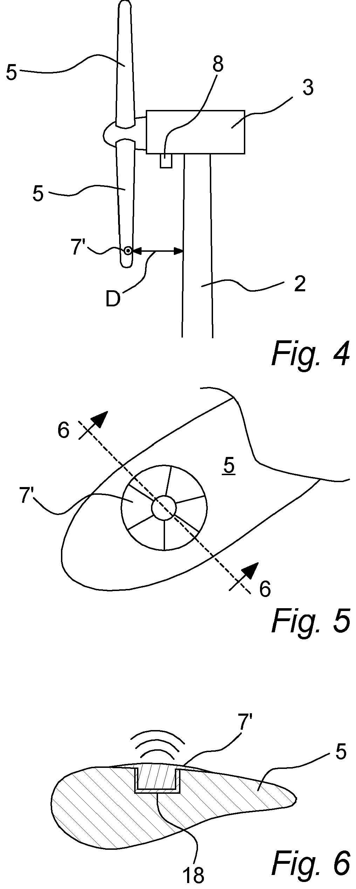

Fig. 4 shows the wind turbine 1 with the distance sensor unit 7' integrated into the body of the wind turbine blade 5. Here, the distance sensor unit 7' is arranged in the tip section of the wind turbine blade 5. Typically, the distance sensor unit is located on the suction side of the blade. Typically, the distance sensor unit is located closer to the tip than to the root of the blade.

The transmitted signal and/or the reflected signal are preferably stored in a memory unit in the distance sensor unit. Further, the measured distance, the measured rotational speed, the actual distance and/or the actual pitch angle are preferably also stored in the memory unit. Once the distance sensor unit 7' is activated, the processor 10 transmits all or some of the stored or computed data to the local controller 17 via the respective radio transceivers 15, 16.

Fig. 5 shows the tip section of the wind turbine 1 where the top of the distance sensor unit 7' has a smooth curved surface so that it has a minimal aerodynamic impact on the local airflow over the blade surface. In typical embodiments, the distance sensor unit is flushed with the surface of the blade to not disturb the aerodynamics of the blade.

Fig. 6 shows a cross-sectional view of the tip section of the wind turbine blade 5, wherein a recess 18 is formed in the blade surface. The majority, if not all, of the distance sensor unit 7' is concealed within the volume of the recess 18. The top of the distance sensor unit 7' is thereby substantially aligned with the blade surface, as indicated in fig. 6.

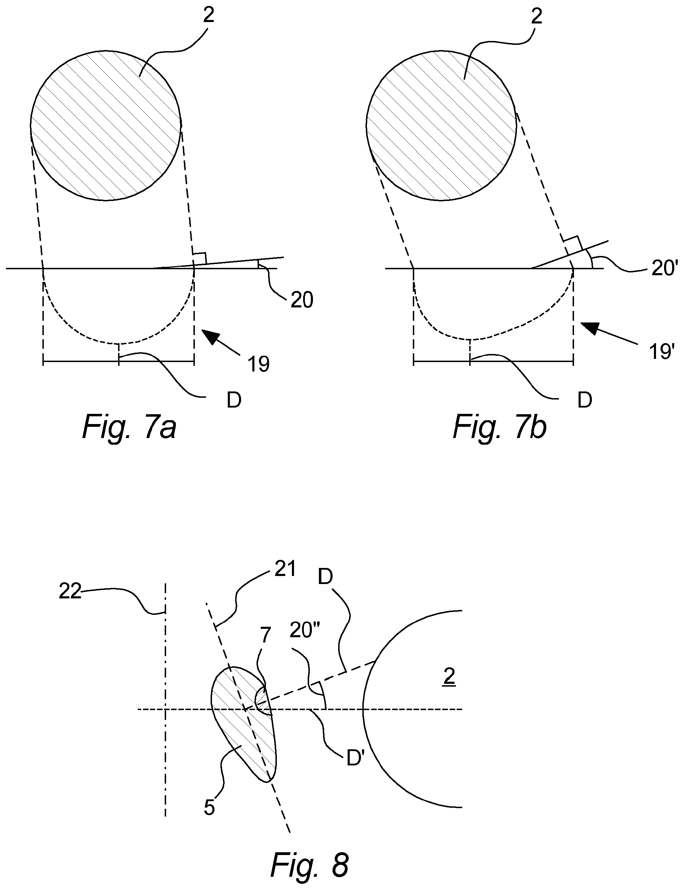

Fig. 7a and fig 7b shows a top cross-sectional view of the wind turbine tower 2 and two measured distance profiles 19, 19' at different pitch angles 20, 20', respectively. The two figures 7a, 7b corresponds to two different measurements performed under different conditions, resulting in different actual pitch angles and consequently different distance profiles. In both cases, the processor 10 scans the measuring field and takes multiple distance measurements which together form a distance profile 19 at a certain pitch angle 20. A first distance profile 19 is indicative of a first pitch angle 20. A second distance profile 19' is indicative of a second pitch angle 20'. The processor 10 uses the first and/or the second distance profile 19, 19' to determine an actual pitch angle of the wind turbine blade 5 at the sensor location. The measuring field at least covers an area in front of the distance sensor unit in which the tower is or is going to be reflected.

The horizontal direction may be interpreted as a position axis, indicating the position/angular position in which measurements of the distance profile were performed. The dashed lines between the tower 2 and the respective distance profiles 19, 19' indicate the angle at which the distance sensor unit performs its distance measurement, which depends on the pitch angle. In this exemplary illustration, the first distance profile 19 is based on measurements performed at a small pitch angle 20 of, whereas the second distance profile 19' is based on measurements performed at a larger pitch angle 20'. Note that the distance profile is a representation of the tower reproduced by reflections of the signals sent out by the radar measuring system 9.

Note particularly how the shape of the first distance profile 19 approximates an arc of the circular cross-sectional shape of the wind turbine tower 2. In contrast, the second distance profile 19' is skewed. The smallest distance D of the second distance profile 19' is shifted towards the left as a result of the pitch angle 20'. Further, the horizontal position of the second distance profile 19' is shifted towards the right, in comparison with the first distance profile 19. Furthermore, the horizontal extend of the second distance profile 20' is enlarged, in comparison with the first distance profile 19.

Any of these above mention features of the distance profiles 19,19' (e.g. skewness, smallest distance, horizontal position, horizontal extend) may alone or in combination with each other be utilized to approximate a pitching angle of the wind turbine blade 5. For example, the first (and/or last) pick up of a reflection represents an indication of the actual pitch angle.

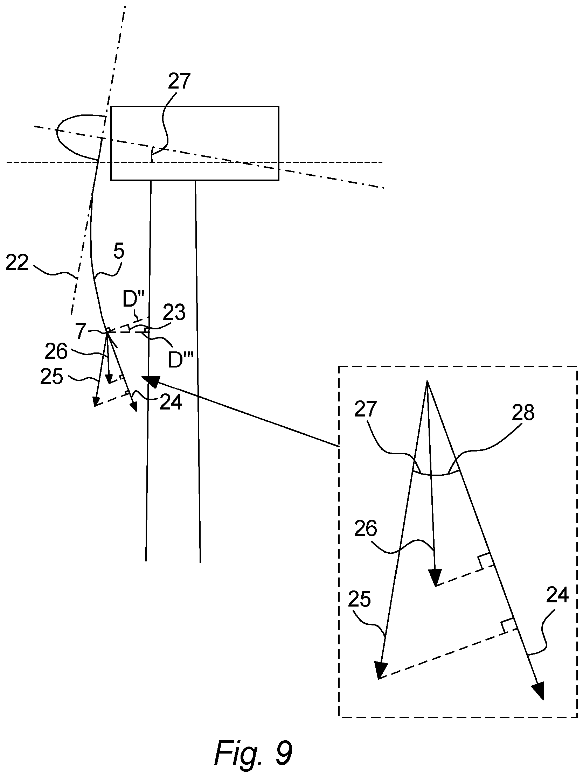

As illustrated in figs. 8-9, the processor 10 is configured to compensate for the influence of the pitch angle and a deflection angle (shown in fig. 9) so that it determines the actual distance i.e. the shortest distance between the wind turbine blade 5 and the wind turbine tower 2.

Fig. 8 shows a distance measurement between the wind turbine blade 5 and the wind turbine tower 2, where the wind turbine blade 5 is positioned in a pitch angle 20" perpendicularly to the wind turbine tower 2 in the horizontal plane. As illustrated, in this position the chord line 21 of the wind turbine blade 5 is pitched into an oblique angle relative to the rotor plane 22.

The distance sensor unit 7 measures a distance D which is influenced by the pitch angle 20''. The processor 10 uses the principle explained in relation to fig. 7 to determine the pitch angle 20''. The processor 10 then uses trigonometry to calculate the actual distance D' between the wind turbine blade 5 and the wind turbine tower 2 based on the measured distance D and the pitch angle 20".

Fig. 9 shows a distance measurement between the wind turbine blade 5 and the wind turbine tower 2 according to an embodiment of the invention, where the wind turbine blade 5 is positioned in a bend condition so that the distance sensor unit 7 is positioned in a deflection angle 23 in the vertical plane. The distance sensor unit 7 measures a distance D'' between the wind turbine blade 5 and the wind turbine tower 2.

The processor 10 measures the acceleration in the longitudinal direction 24 of the wind turbine blade 5 via the accelerometer. The processor 10 uses the measured signal from the gyroscope 14 to determine the centripetal force, for example using the radial position which may be known from commissioning at installation, or which may be measured or determined. The centrifugal force 25 acting on an arbitrary segment of (e.g. the distance sensor unit) the wind turbine blade 5 parallel to the rotor plane 22 and the gravity force 26 acting on the wind turbine blade 5 in the vertical plane are projected onto a tangent line at the sensor location using the tilting angle 27 of the rotor 4. The projected force components are summed to indicate the magnitude of the acceleration component in the longitudinal direction, which is measured by the accelerometer.

The processor 10 then determines the difference between the measured acceleration in the longitudinal direction 24 and the sum of the estimated projected force component of the centripetal force 25 and the projected gravity force 26. The processor 10 uses trigonometry to calculate the actual distance D‴ between the wind turbine blade 5 and the wind turbine tower 2 based on the above difference.

Note that in other embodiments of the invention, a deflection may be calculated using alternative approaches based on measuring the acceleration as outlined within the disclosure. Note also the invention is not restricted to any particular convention regarding directions of centrifugal force, centripetal force, and gravity. For example, an accelerometer may measure gravity as upwards, and calculations for determining a deflection or a tip-to-tower distance may be performed accordingly.

Thus, in some embodiments, the distance sensor unit 7 is then able to compensate for both the influence of the pitch angle 20 in the horizontal plane and the influence of the deflection angle 23 in the vertical plane. In some other embodiments, the deflection is established as outlined above, but without measuring the distance via a transmitted and reflected signal.

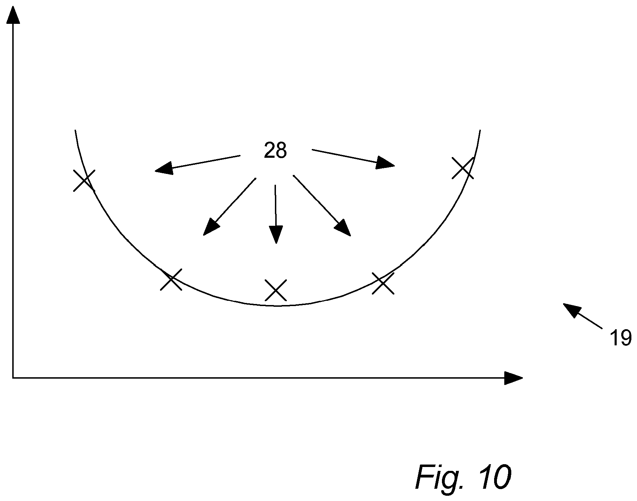

Fig. 10 shows an exemplary series of distance measurements 28 obtained, e.g. from the radar, from which a distance profile 19 may be determined. The measurements and distance profile are shown in a coordinate system. The vertical axis represents distance. The horizontal axis illustrates position of the distance sensor unit as it passes by the wind turbine tower. Alternatively, the axis may equivalently represent angular position of the wind turbine blade or time as it passes by the wind turbine tower. In the context of data analysis of the invention, any parameter (e.g. time, angular position, spatial position) may be used as a variable which distance measurements are performed based upon, e.g. as a parameter on the horizontal axis as illustrated in Fig. 10.

In the illustrated set of measurements, a total of five distance measurements 28 have been performed, and a distance profile 19 is obtained based on these measurements 28. Note that the invention is not limited to a particular number of measurements. A distance profile may be obtained from as few as one, two, or three measurements. In such scenarios, further information may be utilized to establish an accurate distance or distance profile. For example, if the exact angular position of the wind turbine blade is known at the time of measurement, this can be used to estimate an actual pitch angle and, optionally, correct the measured distance.

In some embodiments, a number of signals are transmitted from the distance sensor unit, but only some of the signals are measured, e.g. since some of the signals were successfully reflected from the wind turbine tower.

To establish a distance profile 19, the measurements 28 may for example be compared to a lookup table of various trial distance profiles, and one of these may be selected, for example based on minimizing residuals between the trial distance profiles and the measurements 28. Similarly, a fit may be performed, for example based on a mathematical or numerical function which is representative of the distance profile 19. A fit or trial distance profiles may also rely on other inputs, e.g. tilting angle, deflection angle, angular position of the wind turbine blade etc.

Thus, a distance profile 19 can be established based on distance measurements 28. The obtained distance profile 19 may then be indicative of the tip-to-tower clearance, an actual pitch angle, the deflection angle etc. Thus, obtaining a distance profile 19 based on distance measurements 28 may be an example of how to correct a measured distance.

Note that, in practice, measurements may not necessarily provide single well-defined data points in illustrated in Fig. 10. A radar measurement may for example provide an angular array of measurement data points. However, such more complex data may similarly be used to obtain a distance, correct a measured distance, or obtain a distance profile 19, e.g. by fitting the data.

In an exemplary embodiment, an actual pitch angle of the wind turbine blade is determined, at least partly, based on measurements of the acceleration in the distance sensor unit. In some embodiments, an actual pitch angle may even be determined independently from transmitting and receiving a signal. The pitch angle of the wind turbine blade may affect the directions/orientations in which the accelerations are measured, for example relative to gravity, and/or relative to the longitudinal direction of the blade. Thus, based on measured accelerations in the blade, the pitch angle may be determined.

In an exemplary embodiment, the measured distance is determined based on transmitting and measuring a signal by the distance sensor unit 7. Particularly, the transmitter 9a and the receiver 9b performs a series of radar measurements, for example based on pulses or modulation or radio waves or microwaves. The series of radar measurements is performed as the distance sensor unit mounted on a wind turbine blade passes the wind turbine tower. This series of measurements is basis for a distance profile.

A measured distance may be directly derived from the distance profile, e.g. the smallest distance in the series of measurements may be understood as an actual distance. However, this distance may be inaccurate in comparison with an actual distance due to a non-zero pitch angle, a non-zero deflection angle, and/or non-zero tilting angle.

Further steps are then taken to correct the measured distance. For example, corrections may be performed which takes into account tilting angle, the pitch angle, and/or the deflection angle.

A correction of the measurement error due to a non-zero pitch angle may for example be performed based on distance profiles. They may also be based on separate measurements of the pitch angle, e.g. a measurement at the bearing system of the wind turbine. The correction may also be based on modelling of the pitch angle, e.g. for example a wind-speed dependent actual pitch angle. Alternatively, the actual pitch angle may also be based on an accurate measurement of the angular position of the wind turbine blade. For example, if a distance measurement performed while the wind turbine blade is exactly in a downwards angle (or another accurately determined angle), the pitch angle (or correspondingly, the actual distance) is derivable based on the measured distance and the angular position.

In an exemplary calculation, a series of distance measurements are performed while a wind turbine blade rotates past the wind turbine tower. The measurements yield a minimal distance of 3 meters. Through other processing, a pitching angle of 15 degrees is determined. The actual distance may then be approximated, for example using a sine relation of a triangle sin(A) = opposite / hypotenuse, where A is an angle of 75 degrees, i.e. a right angle minus the pitching angle. The opposite of the triangle corresponds to the actual distance, whereas the hypotenuse corresponds to the measured distance. Thus, the actual distance may be calculated to be approximately 2.9 meters. This example is merely meant to illustrate how an actual distance may be approximated using trigonometrical principles. In embodiments of the invention, the actual distance may be calculated without the use of trigonometry, and/or by performing further calculations, e.g. taking into account the cross-sectional shape of the wind turbine tower, the tilting angle, the deflection angle etc.

A correction of the measurement error due to a non-zero tilting angle may for example be based on a separate measurement or calculation of the tilting angle. The tilting angle may typically be known by design but may alternatively be separately measured or calculated at the nacelle or the wind turbine.

In an exemplary calculation of a correction due to a non-zero tilting angle, a wind turbine blade length is 80 meters with a tilting angle of 2.5 degrees. Here, the correction to the distance may be approximated, for example using a sine relation of a triangle sin(A) = opposite / hypotenuse, where A is an angle of 2.5 degrees, i.e. the tilting angle. The opposite of the triangle corresponds to the correction, whereas the hypotenuse corresponds to the length of the wind turbine blade. Thus, the correction may be calculated to be approximately 3.5 meters. This example is merely meant to illustrate how correction to the measured distance may be approximated using trigonometrical principles. In embodiments of the invention, the actual distance may be calculated without the use of trigonometry, and/or by performing further calculations, e.g. taking into account that the angle of the distance measurement is also affected by the tilting angle.

A correction of the measurement error due to a non-zero deflection angle may for example be based on a separate measurement or calculation of the deflection angle. The calculation or measurement of the deflection angle may for example be based, at least partly, on rotational speed off the wind turbine.

Any of the deflection angle and the tilting may change the angle in which the distance measurement is performed. For example, if the deflection and tilting angle are both zero, the distance measurement may be performed approximately in a horizontal plane when the blade passes the wind turbine tower. A deflection angle or a tilting angle may then affect the angle at which the distance sensor unit performs is distance measurement, such that it deviates from in a horizontal plane.

In an exemplary calculation of a correction due to a non-zero deflection angle, the combined deflection angle and tilting angle results in a deviation of 8 degrees from by the measurement angle from a horizontal plane. The measurements yields a minimal distance of 3 meters. The actual distance may then be approximated, for example using a sine relation of a triangle sin(A) = opposite / hypotenuse, where A is an angle of 85 degrees, i.e. a right angle minus the deviation from the horizontal plane. The opposite of the triangle corresponds to the actual distance, whereas the hypotenuse corresponds to the measured distance. Thus, the actual distance may be calculated to be approximately 2.97 meters. This example is merely meant to illustrate how an actual distance may be approximated using trigonometrical principles. In embodiments of the invention, the actual distance may be calculated without the use of trigonometry, and/or by performing further calculations. In embodiments of the invention, the distance sensor unit may also be arranged to perform measurements at a certain angle, which may also be taken into account.

The present invention i.e. the above described method and system is advantageous in that, in contrary to prior art distance measuring systems, the present invention determines the actual distance i.e. accounting for the angle in which the distance sensor sends / receives e.g. radar beams. More specifically, accounting for the reflected signals (e.g. from a radar) based on which the distance is calculated is different depending on the angle of the distance sensor relative to the tower. Further, the invention allows measuring the deflection via accelerations, which is also indicative of the tip-to-tower distance. Moreover, the invention allows monitoring the state of the wind turbine blade based on eigenfrequencies of the wind turbine blade.

The invention is not limited to the embodiments described herein, and may be modified or adapted without departing from the scope of the present invention as described in the patent claims below.

## Claims

1. A method of determining an actual pitch angle of a wind turbine blade of a wind turbine and a tip-to-tower distance (D) of a wind turbine (1), the wind turbine (1) comprising a wind turbine tower (2), a nacelle (3) arranged on top of the wind turbine tower (2), a rotatable rotor with at least one wind turbine blade (5) arranged relative to the nacelle (3), where a distance sensor unit (7) is arranged on the at least one wind turbine blade (5) and comprises at least a transmitter (9a) and a receiver (9b), wherein the method comprises the steps of:
- transmitting a signal from the distance sensor unit (7) toward the wind turbine tower (2),
- measuring a signal reflected from the wind turbine tower (2),
- determining the distance (D) between the wind turbine tower (2) and the at least one wind turbine blade (5) based on the transmitted signal and the reflected signal,
the method further comprising the steps of
- determining the actual pitch angle at the sensor unit location, based on establishing at least one distance profile (19) indicative of at least one pitch angle of the at least one wind turbine blade (5), wherein the actual pitch angle is determined based on the at least one distance profile (19),
- correcting the measured distance (D) based on at least one of the actual pitch angle and a deflection angle (23) of the at least one wind turbine blade (5) at the location of the distance sensor unit,
wherein the actual pitch angle is different from a measured pitch angle, wherein the measured pitch angle is measured at a pitch bearing system of the wind turbine.

2. A method according to claim 1, **characterised in that** the method further comprises a step of waking up the distance sensor unit (7) prior to the at least one wind turbine blade (5) passing the wind turbine tower (2), where the distance sensor unit (5) goes to sleep after the at least one wind turbine blade (5) has passed the wind turbine tower (2).

3. A method according to claim 2, wherein the step of waking up the distance sensor unit (7) is performed by a processor (10) based on an acceleration signal from an accelerometer of the distance sensor unit (7).

4. A method according to any of the preceding claims, wherein the step of correcting the measured distance is further based on a tilting angle of the wind turbine.

5. A method according to any of the preceding claims, wherein the wind turbine (1) is placed on a floating foundation, wherein the step of correcting the measured distance is based on a wind turbine tower angle of the wind turbine tower (2).

6. A method according to any of the preceding claims, wherein the step of determining a distance (D) is based on frequency shift keying.

7. A method according to any of the preceding claims, wherein the method further comprises a step of measuring one or more blade eigenfrequencies of the at least one wind turbine blade (5).

8. A distance sensor unit (7) for determining a tip-to-tower clearance of a wind turbine (1), the wind turbine comprising a wind turbine tower (2), a nacelle (3) arranged on top of the wind turbine tower (2), and a rotatable rotor with at least one wind turbine blade (5) arranged relative to the nacelle (3), wherein the distance sensor unit (7) is arranged to be located on the at least one wind turbine blade (5), wherein the distance sensor unit (7) comprises a transmitter (9a) and a receiver (9b), wherein the transmitter (9a) is configured to transmit a signal toward the wind turbine tower (2) and the receiver (9b) is configured to measure a signal reflected from the wind turbine tower (2), wherein the distance sensor unit (7) further comprises a processor (10) configured to determine a distance (D) between the wind turbine tower (2) and the at least one wind turbine blade (5) based on the transmitted signal and the reflected signal, wherein the distance sensor unit (7) further comprises an accelerometer (11), wherein the processor (10) is further configured to correct the measured distance based on at least one of an actual pitch angle and a deflection angle of the at least one wind turbine blade (5) at the location of the distance sensor unit (7), wherein the actual pitch angle is different from a measured pitch angle, wherein the actual pitch angle is determined based on measurements of acceleration from the accelerometer (11), and wherein the measured pitch angle is measured at a pitch bearing system of the wind turbine.

9. A distance sensor unit according to claim 8, **characterised in that** the distance sensor unit (7) is configured as a small self-powered sensor unit, which is optionally embedded or integrated into the at least one wind turbine blade (5).

10. A distance sensor unit according to any one of claims 8 to 9, wherein the distance sensor unit (7) comprises a memory.

11. A wind turbine (1) comprising a wind turbine tower (2), a nacelle (3) arranged on top of the wind turbine tower (3), a rotatable rotor with at least one wind turbine blade (5) arranged relative to the nacelle (3), and a distance sensor unit (7) arranged on the at least one wind turbine blade (5), wherein the distance sensor unit (7) comprises a transmitter (9a) and a receiver (9b), wherein the transmitter (9a) is configured to transmit a signal toward the wind turbine tower (2) and the receiver (9b) is configured to measure a signal reflected from the wind turbine tower (2), wherein the distance sensor unit (7) further comprises a processor (10) configured to determine a distance (D) between the wind turbine tower (2) and the at least one wind turbine blade (5) based on the transmitted signal and the reflected signal, wherein the distance sensor unit (7) further comprises an accelerometer (11), wherein the processor (10) is further configured to correct the measured distance based on at least one of an actual pitch angle and a deflection angle of the at least one wind turbine blade (5) at a location of the distance sensor unit (7) on the at least one wind turbine blade (5) wherein the actual pitch angle is different from a measured pitch angle, wherein the actual pitch angle is determined based on measurements of acceleration from the accelerometer (11), and wherein the measured pitch angle is measured at a pitch bearing system of the wind turbine.

12. A wind turbine according to claim 11, wherein the distance sensor unit (7) is installed at least 0.5 meter from a receptor located in the at least one wind turbine blade (5), for example at least 1 meter from the receptor, for example at least 2 meters from the receptor, for example at least 3 meters from the receptor, such as at least 5 meters from the receptor.

13. A wind turbine according to any one of claims 11 to 12, wherein the distance sensor unit (7) is installed at least 0.5 meter from a down conductor located in the at least one wind turbine blade (5), for example at least 1 meter from the down conductor, such as at least 2 meters from the down conductor.

## Patentansprüche

1. Verfahren zum Bestimmen eines tatsächlichen Einstellwinkels eines Windkraftanlagenblatts einer Windkraftanlage und eines Spitze-Turm-Abstands (D) einer Windkraftanlage (1), die Windkraftanlage (1) umfassend einen Windkraftanlagenturm (2), eine Gondel (3), die oben auf dem Windkraftanlagenturm (2) angeordnet ist, und einen drehbaren Rotor mit mindestens einem Windkraftanlagenblatt (5), das relativ zu der Gondel (3) angeordnet ist, wobei eine Abstandssensoreinheit (7) auf dem mindestens einen Windkraftanlagenblatt (5) angeordnet ist und mindestens einen Sender (9a) und einen Empfänger (9b) umfasst, wobei das Verfahren die Schritte umfasst:
- Senden eines Signals von der Abstandssensoreinheit (7) in Richtung des Windkraftanlagenturms (2),
- Messen eines Signals, das von dem Windkraftanlagenturm (2) reflektiert wird,
- Bestimmen des Abstands (D) zwischen dem Windkraftanlagenturm (2) und dem mindestens einen Windkraftanlagenblatt (5) basierend auf dem gesendeten Signal und dem reflektierten Signal,
das Verfahren ferner umfassend die Schritte
- Bestimmen des tatsächlichen Einstellwinkels an der Sensoreinheitsstelle basierend auf einem Erstellen mindestens eines Abstandsprofils (19), das mindestens einen Einstellwinkel des mindestens einen Windkraftanlagenblatts (5) angibt, wobei der tatsächliche Einstellwinkel basierend auf dem mindestens einen Abstandsprofil (19) bestimmt wird,
- Korrigieren des gemessenen Abstands (D) basierend auf mindestens einem von dem tatsächlichen Einstellwinkel und einem Ablenkwinkel (23) des mindestens einen Windkraftanlagenblatts (5) an der Stelle der Abstandssensoreinheit,
wobei sich der tatsächliche Einstellwinkel von einem gemessenen Einstellwinkel unterscheidet, wobei der gemessene Einstellwinkel an einem Einstellwinkellagersystem der Windkraftanlage gemessen wird.

2. Verfahren nach Anspruch 1, **dadurch gekennzeichnet, dass** das Verfahren ferner einen Schritt eines Aufweckens der Abstandssensoreinheit (7) umfasst, bevor das mindestens eine Windkraftanlagenblatt (5) den Windkraftanlagenturm (2) passiert, wobei die Abstandssensoreinheit (5) in Ruhezustand übergeht, nachdem das mindestens eine Windkraftanlagenblatt (5) den Windkraftanlagenturm (2) passiert hat.

3. Verfahren nach Anspruch 2, wobei der Schritt des Aufweckens der Abstandssensoreinheit (7) durch einen Prozessor (10) basierend auf einem Beschleunigungssignal von einem Beschleunigungsmesser der Abstandssensoreinheit (7) durchgeführt wird.

4. Verfahren nach einem der vorstehenden Ansprüche, wobei der Schritt des Korrigierens des gemessenen Abstands ferner auf einem Neigungswinkel der Windkraftanlage basiert.

5. Verfahren nach einem der vorstehenden Ansprüche, wobei die Windkraftanlage (1) auf einem schwimmenden Fundament platziert wird, wobei der Schritt des Korrigierens des gemessenen Abstands auf einem Windkraftanlagenturmwinkel des Windkraftanlagenturms (2) basiert.

6. Verfahren nach einem der vorstehenden Ansprüche, wobei der Schritt des Bestimmens eines Abstands (D) auf Frequenzumtastung basiert.

7. Verfahren nach einem der vorstehenden Ansprüche, wobei das Verfahren ferner einen Schritt des Messens einer oder mehrerer Blatteigenfrequenzen des mindestens einen Windkraftanlagenblatts (5) umfasst.

8. Abstandssensoreinheit (7) zum Bestimmen eines Spitze-zu-Turm-Freiraums einer Windkraftanlage (1), die Windkraftanlage umfassend einen Windkraftanlagenturm (2), eine Gondel (3), die oben auf dem Windkraftanlagenturm (2) angeordnet ist, und einen drehbaren Rotor mit mindestens einem Windkraftanlagenblatt (5), das relativ zu der Gondel (3) angeordnet ist, wobei die Abstandssensoreinheit (7) angeordnet ist, um sich auf dem mindestens einen Windkraftanlagenblatt (5) zu befinden, wobei die Abstandssensoreinheit (7) einen Sender (9a) und einen Empfänger (9b) umfasst, wobei der Sender (9a) konfiguriert ist, um ein Signal in Richtung des Windkraftanlagenturms (2) zu senden, und der Empfänger (9b) konfiguriert ist, um ein Signal, das von dem Windkraftanlagenturm (2) reflektiert wird, zu messen, wobei die Abstandssensoreinheit (7) ferner einen Prozessor (10), der konfiguriert ist, um einen Abstand (D) zwischen dem Windkraftanlagenturm (2) und dem mindestens einen Windkraftanlagenblatt (5) basierend auf dem gesendeten Signal und dem reflektierten Signal zu bestimmen, umfasst, wobei die Abstandssensoreinheit (7) ferner einen Beschleunigungsmesser (11) umfasst, wobei der Prozessor (10) ferner konfiguriert ist, um den gemessenen Abstand basierend auf mindestens einem von einem tatsächlichen Einstellwinkel und einem Ablenkwinkel des mindestens einen Windkraftanlagenblatts (5) an der Stelle der Abstandssensoreinheit (7) zu korrigieren, wobei sich der tatsächliche Einstellwinkel von einem gemessenen Einstellwinkel unterscheidet, wobei der tatsächliche Einstellwinkel basierend auf Beschleunigungsmessungen von dem Beschleunigungsmesser (11) bestimmt wird, und wobei der gemessene Einstellwinkel an einem Einstellwinkellagersystem der Windkraftanlage gemessen wird.

9. Abstandssensoreinheit nach Anspruch 8, **dadurch gekennzeichnet, dass** die Abstandssensoreinheit (7) als eine kleine, autarke Sensoreinheit, die optional in das mindestens eine Windkraftanlagenblatt (5) eingebettet oder integriert ist, konfiguriert ist.

10. Abstandssensoreinheit nach einem der Ansprüche 8 bis 9, wobei die Abstandssensoreinheit (7) einen Speicher umfasst.

11. Windkraftanlage (1), umfassend einen Windkraftanlagenturm (2), eine Gondel (3), die oben auf dem Windkraftanlagenturm (3) angeordnet ist, einen drehbaren Rotor mit mindestens einem Windkraftanlagenblatt (5), das relativ zu der Gondel (3) angeordnet ist, und eine Abstandssensoreinheit (7), die auf dem mindestens einen Windkraftanlagenblatt (5) angeordnet ist, wobei die Abstandssensoreinheit (7) einen Sender (9a) und einen Empfänger (9b) umfasst, wobei der Sender (9a) konfiguriert ist, um ein Signal in Richtung des Windkraftanlagenturms (2) zu senden, und der Empfänger (9b) konfiguriert ist, um ein Signal, das von dem Windkraftanlagenturm (2) reflektiert wird, zu messen, wobei die Abstandssensoreinheit (7) ferner einen Prozessor (10), der konfiguriert ist, um einen Abstand (D) zwischen dem Windkraftanlagenturm (2) und dem mindestens einen Windkraftanlagenblatt (5) basierend auf dem gesendeten Signal und dem reflektierten Signal zu bestimmen, umfasst, wobei die Abstandssensoreinheit (7) ferner einen Beschleunigungsmesser (11) umfasst, wobei der Prozessor (10) ferner konfiguriert ist, um den gemessenen Abstand basierend auf mindestens einem von einem tatsächlichen Einstellwinkel und einem Ablenkwinkel des mindestens einen Windkraftanlagenblatts (5) an einer Stelle der Abstandssensoreinheit (7) auf dem mindestens einen Windkraftanlagenblatt (5) zu korrigieren, wobei sich der tatsächliche Einstellwinkel von einem gemessenen Einstellwinkel unterscheidet, wobei der tatsächliche Einstellwinkel basierend auf Beschleunigungsmessungen von dem Beschleunigungsmesser (11) bestimmt wird, und wobei der gemessene Einstellwinkel an einem Einstellwinkellagersystem der Windkraftanlage gemessen wird.

12. Windkraftanlage nach Anspruch 11, wobei die Abstandssensoreinheit (7) mindestens 0,5 Meter von einem Rezeptor, der sich in dem mindestens einen Windkraftanlagenblatt (5) befindet, zum Beispiel mindestens 1 Meter von dem Rezeptor, zum Beispiel mindestens 2 Meter von dem Rezeptor, zum Beispiel mindestens 3 Meter von dem Rezeptor, wie mindestens 5 Meter von dem Rezeptor, installiert ist.

13. Windkraftanlage nach einem der Ansprüche 11 bis 12, wobei die Abstandssensoreinheit (7) mindestens 0,5 Meter von einem Ableiter, der sich in dem mindestens einen Windkraftanlagenblatt (5) befindet, zum Beispiel mindestens 1 Meter von dem Ableiter, wie mindestens 2 Meter von dem Ableiter, installiert ist.

## Revendications

1. Procédé de détermination d'un angle de calage réel d'une pale d'éolienne d'une éolienne et d'une distance (D) entre la pointe et la tour d'une éolienne (1), l'éolienne (1) comprenant une tour éolienne (2), une nacelle (3) agencée au sommet de la tour éolienne (2), un rotor rotatif avec au moins une pale d'éolienne (5) agencée par rapport à la nacelle (3), où une unité de capteur de distance (7) est agencée sur l'au moins une pale d'éolienne (5) et comprend au moins un émetteur (9a) et un récepteur (9b), dans lequel le procédé comprend les étapes consistant à :
- émettre un signal depuis l'unité de capteur de distance (7) vers la tour éolienne (2),
- mesurer un signal réfléchi depuis la tour éolienne (2),
- déterminer la distance (D) entre la tour éolienne (2) et l'au moins une pale d'éolienne (5) sur la base du signal émis et du signal réfléchi,
le procédé comprenant en outre les étapes consistant à
- déterminer l'angle de calage réel au niveau de l'emplacement d'unité de capteur, sur la base d'un établissement d'au moins un profil de distance (19) indiquant au moins un angle de calage de l'au moins une pale d'éolienne (5), dans lequel l'angle de calage réel est déterminé sur la base de l'au moins un profil de distance (19),
- corriger la distance (D) mesurée sur la base d'au moins l'un parmi l'angle de calage réel et un angle de déflexion (23) de l'au moins une pale d'éolienne (5) au niveau l'emplacement de l'unité de capteur de distance,
dans lequel l'angle de calage réel est différent d'un angle de calage mesuré, dans lequel l'angle de calage mesuré est mesuré au niveau d'un système de palier de calage de l'éolienne.

2. Procédé selon la revendication 1, **caractérisé en ce que** le procédé comprend en outre une étape consistant à activer l'unité de capteur de distance (7) avant que l'au moins une pale d'éolienne (5) ne passe devant la tour éolienne (2), où l'unité de capteur de distance (5) se met en veille après que l'au moins une pale d'éolienne (5) a passé la tour éolienne (2).

3. Procédé selon la revendication 2, dans lequel l'étape consistant à activer l'unité de capteur de distance (7) est réalisée par un processeur (10) sur la base d'un signal d'accélération provenant d'un accéléromètre de l'unité de capteur de distance (7).

4. Procédé selon l'une quelconque des revendications précédentes, dans lequel l'étape consistant à corriger la distance mesurée est en outre basée sur un angle d'inclinaison de l'éolienne.

5. Procédé selon l'une quelconque des revendications précédentes, dans lequel l'éolienne (1) est placée sur une fondation par caisson flottant, dans lequel l'étape consistant à corriger la distance mesurée est basée sur un angle de tour éolienne de la tour éolienne (2).

6. Procédé selon l'une quelconque des revendications précédentes, dans lequel l'étape consistant à déterminer une distance (D) est basée sur une modulation par déplacement de fréquence.

7. Procédé selon l'une quelconque des revendications précédentes, dans lequel le procédé comprend en outre une étape consistant à mesurer une ou plusieurs fréquences propres de pale de l'au moins une pale d'éolienne (5).

8. Unité de capteur de distance (7) permettant de déterminer un dégagement entre la pointe et la tour d'une éolienne (1), l'éolienne comprenant une tour éolienne (2), une nacelle (3) agencée au sommet de la tour éolienne (2), et un rotor rotatif avec au moins une pale d'éolienne (5) agencée par rapport à la nacelle (3), dans laquelle l'unité de capteur de distance (7) est agencée pour être située sur l'au moins une pale d'éolienne (5), dans laquelle l'unité de capteur de distance (7) comprend un émetteur (9a) et un récepteur (9b), dans laquelle l'émetteur (9a) est configuré pour émettre un signal vers la tour éolienne (2) et le récepteur (9b) est configuré pour mesurer un signal réfléchi depuis la tour éolienne (2), dans laquelle l'unité de capteur de distance (7) comprend en outre un processeur (10) configuré pour déterminer une distance (D) entre la tour éolienne (2) et l'au moins une pale d'éolienne (5) sur la base du signal émis et du signal réfléchi, dans laquelle l'unité de capteur de distance (7) comprend en outre un accéléromètre (11), dans laquelle le processeur (10) est en outre configuré pour corriger la distance mesurée sur la base d'au moins l'un parmi un angle de calage réel et un angle de déflexion de l'au moins une pale d'éolienne (5) au niveau de l'emplacement de l'unité de capteur de distance (7), dans laquelle l'angle de calage réel est différent d'un angle de calage mesuré, dans laquelle l'angle de calage réel est déterminé sur la base de mesures d'accélération provenant de l'accéléromètre (11), et dans laquelle l'angle de calage mesuré est mesuré au niveau d'un système de palier de calage de l'éolienne.

9. Unité de capteur de distance selon la revendication 8, **caractérisée en ce que** l'unité de capteur de distance (7) est configurée en tant que petite unité de capteur auto-alimentée, qui est éventuellement encastrée ou intégrée dans l'au moins une pale d'éolienne (5).

10. Unité de capteur de distance selon l'une quelconque des revendications 8 à 9, dans laquelle l'unité de capteur de distance (7) comprend une mémoire.

11. Éolienne (1) comprenant une tour éolienne (2), une nacelle (3) agencée au sommet de la tour éolienne (3), un rotor rotatif avec au moins une pale d'éolienne (5) agencée par rapport à la nacelle (3), et une unité de capteur de distance (7) agencée sur l'au moins une pale d'éolienne (5), dans laquelle l'unité de capteur de distance (7) comprend un émetteur (9a) et un récepteur (9b), dans laquelle l'émetteur (9a) est configuré pour émettre un signal vers la tour éolienne (2) et le récepteur (9b) est configuré pour mesurer un signal réfléchi depuis la tour éolienne (2), dans laquelle l'unité de capteur de distance (7) comprend en outre un processeur (10) configuré pour déterminer une distance (D) entre la tour éolienne (2) et l'au moins une pale d'éolienne (5) sur la base du signal émis et du signal réfléchi, dans laquelle l'unité de capteur de distance (7) comprend en outre un accéléromètre (11), dans laquelle le processeur (10) est en outre configuré pour corriger la distance mesurée sur la base d'au moins l'un parmi un angle de calage réel et un angle de déflexion de l'au moins une pale d'éolienne (5) au niveau d'un emplacement de l'unité de capteur de distance (7) sur l'au moins une pale d'éolienne (5) dans laquelle l'angle de calage réel est différent d'un angle de calage mesuré, dans laquelle l'angle de calage réel est déterminé sur la base de mesures d'accélération provenant de l'accéléromètre (11), et dans laquelle l'angle de calage mesuré est mesuré au niveau d'un système de palier de calage de l'éolienne.

12. Éolienne selon la revendication 11, dans laquelle l'unité de capteur de distance (7) est installée à au moins 0,5 mètre d'un récepteur situé dans l'au moins une pale d'éolienne (5), par exemple à au moins 1 mètre du récepteur, par exemple à au moins 2 mètres du récepteur, par exemple à au moins 3 mètres du récepteur, tel qu'à au moins 5 mètres du récepteur.

13. Éolienne selon l'une quelconque des revendications 11 à 12, dans laquelle l'unité de capteur de distance (7) est installée à au moins 0,5 mètre d'un câble de descente situé dans l'au moins une pale d'éolienne (5), par exemple à au moins 1 mètre du câble de descente, tel qu'à au moins 2 mètres du câble de descente.
